# EUROPEAN PATENT APPLICATION

(11) **EP 4 770 079 A1**
(43) Date of publication of application: **01.07.2026**
(21) Application number: 24874855.0
(22) Date of filing: 20.08.2024
(51) Int. Cl.: H04N 9/31, G03B 21/54

(54) **ELECTRONIC DEVICE AND OPERATION METHOD THEREOF**

(30) Priority: 04.10.2023 KR 20230131945
(71) Applicant: Samsung Electronics Co., Ltd., Suwon-si, Gyeonggi-do 16677 (KR)
(72) Inventor: KIM, Jonghwan, Suwon-si, Gyeonggi-do 16677 (KR); KIM, Jongho, Suwon-si, Gyeonggi-do 16677 (KR); SEO, Guiwon, Suwon-si, Gyeonggi-do 16677 (KR); KIM, Beomjoon, Suwon-si, Gyeonggi-do 16677 (KR)
(74) Representative: Gulde & Partner
(86) International application number: PCT/KR2024/012370
(87) International publication number: WO 2025/075296

(57) **Abstract**

Disclosed is an electronic device comprising a projection unit, a memory for storing at least one instruction, and at least one processor for executing the at least one instruction stored in the memory. The at least one processor: receives a selection of first projection information including a first projection position and a first projection purpose among at least one piece of projection information included in a projection information list, wherein the at least one piece of projection information includes a projection position, corresponding to the position of the projection unit, and a projection purpose; adjusts the projection direction of the projection unit to a first projection position; and controls the projection unit to project first content corresponding to the first projection purpose at the first projection position.

## Description

### [Technical Field]

An embodiment of the disclosure relates to an electronic device and an operating method thereof, and more particularly, to an electronic device for projecting information on various projection areas for various projection purposes, and an operating method thereof.

### [Background Art]

Various types of projectors have been developed according to the development of optical technology. A projector may be an electronic device for projecting an image by projecting light onto a certain space or plane. A user may use various types of content or images by using the projector.

### [Disclosure of Invention]

### [Solution to problem]

An electronic device according to an embodiment of the disclosure includes a projector, a memory storing at least one instruction, and at least one processor configured to execute the at least one instruction stored in the memory.

The at least one processor may be configured to execute the at least one instruction stored in the memory to receive selection of first projection information including a first projection location and a first projection purpose from among at least one piece of projection information included in a projection information list.

Each piece of the at least one piece of projection information includes a projection location, which corresponds to a position of the projector, and a projection purpose.

The at least one processor may be configured to execute the at least one instruction stored in the memory to adjust a projection direction of the projector to the first projection location.

The at least one processor may be configured to execute the at least one instruction stored in the memory to control the projector to project, from the first projection location, first content corresponding to the first projection purpose.

### [Brief Description of Drawings]

The above and other aspects, features, and advantages of certain embodiments of the disclosure will be more apparent from the following description, taken in conjunction with the accompanying drawings.
FIG. 1 is a diagram illustrating an electronic device outputting content according to projection information, according to an embodiment of the disclosure.
FIG. 2 is a block diagram of an electronic device according to an embodiment of the disclosure.
FIG. 3 is an internal block diagram of an electronic device according to an embodiment of the disclosure.
FIG. 4 is a diagram for describing an electronic device adjusting a projection location, according to an embodiment of the disclosure.
FIG. 5 illustrates a user directly adjusting a projection location of an electronic device, according to an embodiment of the disclosure.
FIG. 6 is a diagram for describing an electronic device comparing guide images, according to an embodiment of the disclosure.
FIG. 7 illustrates a user controlling an electronic device by using a control device to store projection information according to an embodiment of the disclosure.
FIG. 8 illustrates a user controlling an electronic device by using a control device to use projection information, according to an embodiment of the disclosure.
FIG. 9 illustrates a user controlling a projection operation of an electronic device by using a control device, according to an embodiment of the disclosure.
FIG. 10 illustrates a user controlling a projection operation of an electronic device by using a control device, according to an embodiment of the disclosure.
FIG. 11 illustrates a user controlling a projection operation of an electronic device by using a control device, according to an embodiment of the disclosure.
FIG. 12 illustrates a user controlling a projection operation of an electronic device by using a control device, according to an embodiment of the disclosure.
FIG. 13 illustrates a user controlling a projection operation of an electronic device by using a control device, according to an embodiment of the disclosure.
FIG. 14 is a flowchart of an operating method of an electronic device, according to an embodiment of the disclosure.
FIG. 15 is a flowchart of an operating method of an electronic device, according to an embodiment of the disclosure.

### [Mode for the Invention]

An operating method of an electronic device, according to an embodiment of the disclosure, includes receiving selection of first projection information including a first projection location and a first projection purpose from among at least one piece of projection information included in a projection information list.

The operating method includes adjusting a projection direction to the first projection location, based on the first projection information.

The operating method includes outputting, from the first projection location, first content corresponding to the first projection purpose.

A computer-readable recording medium, according to an embodiment of the disclosure, has recorded thereon a program for executing, on a computer, an operating method of an electronic device, the operating method including receiving selection of first projection information including a first projection location and a first projection purpose from among at least one piece of projection information included in a projection information list.

The computer-readable recording medium has recorded thereon the program for executing, on the computer, the operating method including adjusting a projection direction to the first projection location, based on the first projection information.

The computer-readable recording medium has recorded thereon the program for executing, on the computer, the operating method including outputting, from the first projection location, first content corresponding to the first projection purpose.

Throughout the disclosure, the expression "at least one of a, b, or c" indicates only a, only b, only c, both a and b, both a and c, both b and c, all of a, b, and c, or variations thereof.

Hereinafter, an embodiment of the disclosure will be described in detail with reference to the accompanying drawings such that one of ordinary skill in the art may easily implement the disclosure. However, the disclosure may be implemented in various different forms and is not limited to the embodiment of the disclosure described herein.

Terms used in the disclosure are described as general terms currently used in consideration of functions described in the disclosure, but the terms may have different meanings according to an intention of one of ordinary skill in the art, precedent cases, or the appearance of new technologies. Thus, the terms used herein should not be interpreted only by its name, but have to be defined based on the meaning of the terms together with the description throughout the specification.

Also, the terms used in the disclosure are only used to describe a specific embodiment of the disclosure, and are not intended to limit the disclosure.

Throughout the specification, when a part is "connected" to another part, the part may not only be "directly connected" to the other part, but may also be "electrically connected" to the other part with another element in between.

"The" and similar directives used in the present specification, in particular, in claims, may indicate both singular and plural. Also, unless there is a clear description of an order of operations describing a method according to the disclosure, the operations described may be performed in a suitable order. The disclosure is not limited by the order of description of the described operations.

The phrases "some embodiments of the disclosure" or "an embodiment of the disclosure" appearing in various places in this specification are not necessarily all referring to the same embodiment of the disclosure.

Some embodiments of the disclosure may be represented by functional block configurations and various processing operations. Some or all of these functional blocks may be implemented by various numbers of hardware and/or software configurations that perform particular functions. For example, the functional blocks of the disclosure may be implemented by one or more microprocessors or by circuit configurations for a certain function. Also, for example, the functional blocks of the disclosure may be implemented in various programming or scripting languages. The functional blocks may be implemented by algorithms executed in one or more processors. In addition, the disclosure may employ general techniques for electronic environment setting, signal processing, and/or data processing. Terms such as "mechanism", "element", "means", and "configuration" may be used widely and are not limited as mechanical and physical configurations.

In addition, a connection line or a connection member between components shown in drawings is merely a functional connection and/or a physical or circuit connection. In an actual device, connections between components may be represented by various functional connections, physical connections, or circuit connections that are replaceable or added.

In addition, terms such as "unit", "-or/-er", and "module" described in the specification denote a unit that processes at least one function or operation, which may be implemented in hardware or software, or implemented in a combination of hardware and software.

Also, the term "user" in the specification denotes a person using an electronic device, and may include a consumer, an assessor, a viewer, an administrator, and an installation engineer.

Hereinafter, the disclosure will be described in detail with reference to accompanying drawings.

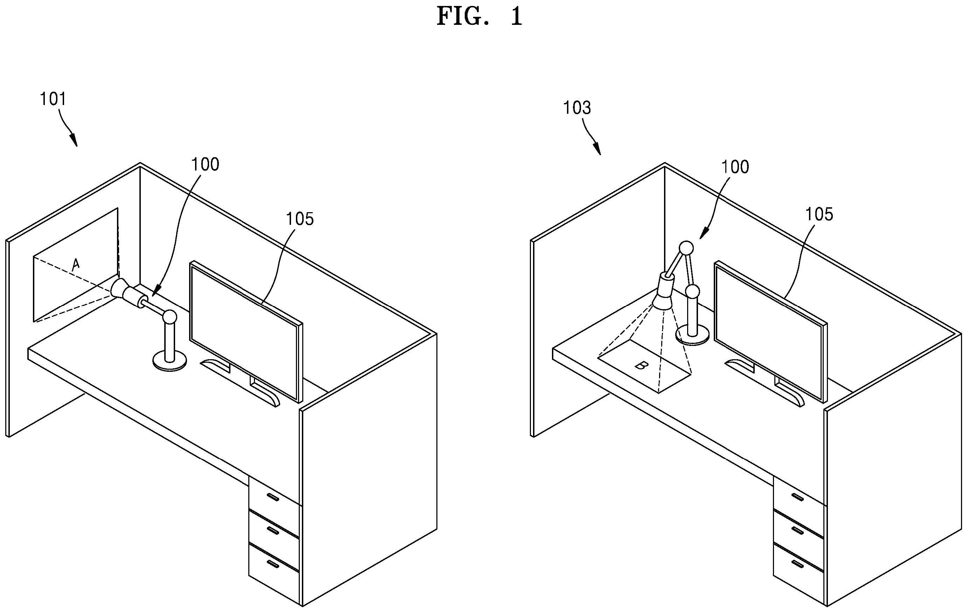

FIG. 1 is a diagram illustrating an electronic device 100 outputting content according to projection information, according to an embodiment of the disclosure.

Referring to FIG. 1, the electronic device 100 may be an electronic device capable of outputting an image. According to an embodiment of the disclosure, the electronic device 100 may be a projector configured to project an image onto a projection space.

The electronic device 100 may be located in any one of various indoor or outdoor environments. The electronic device 100 may be located on a floor, a ceiling, a wall surface, a corner of a wall or floor, a partition, or an inner or outer floor, ceiling, or side surface of any one of other various facilities, equipment, and furniture around the electronic device 100.

According to an embodiment of the disclosure, the electronic device 100 may be mobile. A user may place the electronic device 100 at a specific place or specific point, and move the electronic device 100 to a new place or point desired by the user when a desired location changes.

For example, the electronic device 100 may be movably placed on a table, as shown in FIG. 1.

However, the disclosure is not limited thereto and according to an embodiment of the disclosure, the electronic device 100 may be stationary. The electronic device 100 may be attached to a specific location in a detachable manner or may be fixed to a specific location in a non-detachable manner.

FIG. 1 illustrates that the electronic device 100 is a stand type projector according to an embodiment of the disclosure. According to an embodiment of the disclosure, the electronic device 100 may include a stand, a projector, and a connector.

The stand may operate as a support for holding the electronic device 100. The stand may support the electronic device 100 such that the electronic device 100 is erected.

The projector may be a component configured to project light. According to an embodiment of the disclosure, the projector may project, from a specific projection location, content corresponding to a specific projection purpose.

The connector may be a component connecting the projector and the stand to each other. According to an embodiment of the disclosure, the electronic device 100 may include one or more connectors.

According to an embodiment of the disclosure, the electronic device 100 may further include a driver configured to adjust a location of at least one of the projector, the stand, or the connector connecting the projector and the stand to each other.

According to an embodiment of the disclosure, the electronic device 100 may use the driver to adjust the location of at least one of the stand, the projector, or the connector, thereby controlling the projector to project light from a uniform projection location.

According to an embodiment of the disclosure, the electronic device 100 may be requested to generate projection information.

According to an embodiment of the disclosure, the electronic device 100 may include a user input unit. The user may request the electronic device 100 to generate the projection information by using the user input unit included in the electronic device 100.

According to an embodiment of the disclosure, the electronic device 100 may be controlled by a control device. According to an embodiment of the disclosure, the user may transmit a control signal of requesting the electronic device 100 to generate the projection information, by using the control device.

According to an embodiment of the disclosure, the projection information may be information about light output by the electronic device 100. According to an embodiment of the disclosure, the projection information may include a projection location and a projection purpose.

According to an embodiment of the disclosure, the projection location may be information indicating a location of the projector irradiating light. Light projected by the projector may be formed in a projection area. However, the disclosure is not limited thereto, and according to an embodiment of the disclosure, the projection information may include information about a location of the projection area where projected light is formed, together with the projection location or instead of the projection location.

According to an embodiment of the disclosure, the projection purpose may be information indicating a purpose of content being projected. According to an embodiment of the disclosure, the electronic device 100 may be used for various purposes. For example, the electronic device 100 may be used for at least one purpose from among a lighting purpose, an application output purpose, a display device purpose, such as a monitor or a television, an external device content output purpose, a projection keyboard purpose, and a scanner purpose. The electronic device 100 may project light of content corresponding to a specific purpose.

According to an embodiment of the disclosure, the electronic device 100 may newly generate the projection information including the projection location and the projection purpose, in response to the request to generate the projection information.

According to an embodiment of the disclosure, the electronic device 100 may determine a current projection location of the projector as the projection location to be included in the projection information. For example, the user may adjust a location of at least one of the projector, the connector, or the stand to adjust a location of the projector so that the content is projected from a location desired by the user.

According to an embodiment of the disclosure, based on receiving the request to generate the projection information from the user, the electronic device 100 may determine the current projection location of the projector adjusted by the user as the projection location to be included in the projection information.

According to an embodiment of the disclosure, the electronic device 100 may further include a camera. According to an embodiment of the disclosure, the electronic device 100 may obtain an image by photographing the surroundings with the camera. According to an embodiment of the disclosure, the electronic device 100 may recommend an appropriate projection location based on the image obtained by photographing the surroundings. The user may select the projection location recommended by the electronic device 100 by using the user input unit as the projection location to be included in the projection information. The electronic device 100 may include the projection location selected by the user in the projection information.

When there is a plurality of projection locations recommended by the electronic device 100, the user may select one projection location from among the plurality of recommended projection locations. The electronic device 100 may include the projection location selected by the user in the projection information and store the projection information.

According to an embodiment of the disclosure, when the projection location is determined, the electronic device 100 may project a guide pattern onto a projection area from the projection location. According to an embodiment of the disclosure, the electronic device 100 may perform keystone correction on the guide pattern projected onto the projection area. According to an embodiment of the disclosure, the electronic device 100 may include a keystone correction amount of the guide pattern in the projection information and store the projection information.

According to an embodiment of the disclosure, the electronic device 100 may perform the keystone correction on the guide pattern projected onto the projection area, and then photograph the projection area onto which the keystone corrected guide pattern is projected with the camera to obtain a guide image. According to an embodiment of the disclosure, the electronic device 100 may include the guide image in the projection information and store the projection information.

According to an embodiment of the disclosure, the electronic device 100 may receive selection of the projection purpose from the user through the user input unit. The user may select, by using the user input unit, the projection purpose from among various purposes that may be performed by the electronic device 100.

According to an embodiment of the disclosure, the electronic device 100 may recommend the projection purpose based on the projection location and/or the projection area corresponding to the projection location. According to an embodiment of the disclosure, the electronic device 100 may recommend at least one projection purpose based on at least one of the projection location, a material, a color, or a size of the projection area corresponding to the projection location.

The user may select, as the projection purpose to be included in the projection information, the projection purpose recommended by the electronic device 100 by using the user input unit. When there is a plurality of projection purposes recommended by the electronic device 100, the user may select one projection purpose from among the plurality of recommended projection purposes.

According to an embodiment of the disclosure, the electronic device 100 may adjust the location of the projector to the projection location selected by the user and then photograph the projection area corresponding to the projection location by using the camera to obtain an image of the projection area or a projection plane.

According to an embodiment of the disclosure, the electronic device 100 may analyze the image of the projection plane to identify at least one of flatness, material, color, or brightness of the projection plane.

According to an embodiment of the disclosure, the electronic device 100 may identify ambient brightness through an illumination sensor.

According to an embodiment of the disclosure, the electronic device 100 may obtain, based on at least one of flatness, material, color, brightness of the projection area, or the ambient brightness, a correction value for adjusting at least one of a form/shape, a color, or luminance of content corresponding to the projection purpose selected by the user. According to an embodiment of the disclosure, the electronic device 100 may include the correction value of the content corresponding to the projection purpose in the projection information and store the projection information.

According to an embodiment of the disclosure, the electronic device 100 may generate the projection information including the projection location and the projection purpose as one set.

According to an embodiment of the disclosure, the electronic device 100 may set unique identification information for each set of projection information. For example, the electronic device 100 may receive, from the user through the user input unit or the control device, identification information, such as a number, a symbol, a character, or an ID, which indicates specific projection information.

According to an embodiment of the disclosure, the electronic device 100 may generate a projection information list including at least one piece of projection information. The projection information list may be a list including one or more pieces of projection information generated according to the above-described method.

As such, according to an embodiment of the disclosure, the electronic device 100 may generate the projection information including the projection location and the projection purpose, which are desired or frequency used by the user, and store the projection information.

According to an embodiment of the disclosure, the projection information list may further include, in addition to the projection information generated according to the above-described method, projection information pre-generated by a manufacturer of the electronic device 100. The manufacturer may pre-generate projection information including a specific projection location and a specific projection purpose as one set, and store the same in the projection information list.

For example, the manufacturer may pre-generate the projection information in which the projection purpose is lighting when the projection direction of the projector faces a floor surface where the stand is located and a location of the projection area is on the floor surface, and store the projection information in the projection information list.

For example, the manufacturer may pre-generate the projection purpose to be a monitor expanding purpose, for example, a dual monitor function, when the projection direction of the projector faces a direction perpendicular to the floor surface where the stand is located, and store the projection purpose in the projection information list.

According to an embodiment of the disclosure, the electronic device 100 may receive selection of one of the pieces of projection information included in the projection information list from the user through the user input unit.

According to an embodiment of the disclosure, the user may select the projection information pre-generated by the manufacturer, instead of the projection information set by the user. The electronic device 100 may output content corresponding to a specific projection purpose from a specific projection location, according to the projection location and the projection purpose included in the pre-generated projection information.

According to an embodiment of the disclosure, the electronic device 100 may receive selection of one of the pieces of projection information, for example, first projection information, included in the projection information list from the user through the user input unit. The first projection information may be information including a first projection location and a first projection purpose as one set.

According to an embodiment of the disclosure, based on the first projection information being selected, the electronic device 100 may adjust the projection direction of the projector to the first projection location, according to the first projection location included in the first projection information.

According to an embodiment of the disclosure, when the first projection information includes information about a location of the projection area where projected light is formed, instead of the projection location of the projector, the electronic device 100 may adjust the projection direction of the projector to face the projection area by using the information about the location of the projection area.

According to an embodiment of the disclosure, the electronic device 100 may adjust the projection location of the projector to be the first projection location by controlling the driver to adjust a location of at least one of the projector, the stand, or the connector connecting the projector and the stand to each other.

According to an embodiment of the disclosure, on the basis of the first projection information being selected, the electronic device 100 may control the projector to output the content corresponding to the first projection purpose, according to the first projection purpose included in the first projection information.

According to an embodiment of the disclosure, the first projection purpose may include at least one of a lighting purpose, an application output purpose, a display purpose, such as a monitor or a television, an external device content output purpose, a projection keyboard purpose, or a scanner purpose.

According to an embodiment of the disclosure, when the content corresponding to the first projection purpose is first content, the electronic device 100 may output, from the first projection location, the first content corresponding to the first projection purpose to a first projection area.

Hereinafter, the disclosure will be described in further detail with reference to FIG. 1.

A reference numeral 101 of FIG. 1 illustrates the electronic device 100 projecting, from the first projection location, content A that is the first content corresponding to the first projection purpose, according to the first projection information, when the user selects the first projection information among pre-stored projection information.

According to an embodiment of the disclosure, the first projection information may include a first guide image. The first guide image may be an image obtained by projecting the guide pattern onto the first projection area from the first projection location and then photographing a projection area onto which the guide pattern is projected, when the electronic device 100 generates the first projection information.

According to an embodiment of the disclosure, the first guide image may be an image obtained by keystone correcting, by the electronic device 100, the guide pattern and then photographing a projection area onto which the keystone corrected guide pattern is projected.

According to an embodiment of the disclosure, the electronic device 100 may adjust the location of at least one of the projector, the stand, or the connector so that the projection location of the projector is at the first projection location included in the first projection information, in response to the user selecting the first projection information. As shown in the reference numeral 101 of FIG. 1, the content A projected from the first projection location is projected onto one surface of a partition.

According to an embodiment of the disclosure, the electronic device 100 may project the guide pattern after adjusting the projection location of the projector to be at the first projection location.

According to an embodiment of the disclosure, when a keystone correction amount of the guide pattern is included in the first projection information, the electronic device 100 may obtain the keystone correction amount of the guide pattern from the first projection information and perform keystone correction on the guide pattern projected by the projector at a high speed, based on the keystone correction amount.

However, the disclosure is not limited thereto, and when the keystone correction amount of the guide pattern is not included in the first projection information, according to an embodiment of the disclosure, the electronic device 100 may adjust the projection location of the projector to the first projection location, project the guide pattern, and then perform keystone correction on the guide pattern.

According to an embodiment of the disclosure, the electronic device 100 may obtain the guide image by photographing the projection area onto which the guide pattern is projected, by using the camera.

Hereinafter, the guide image that is obtained by the electronic device 100 by adjusting a location of the projector to the projection location according to the projection information in response to receiving the selection of the projection information from the user, projecting the guide pattern from the adjusted location, and photographing the projection area onto which the guide pattern is projected, will be referred to as a current guide image. The current guide image may be distinguished from an image of the guide pattern included in the projection information, which is obtained while storing the projection location during the generating of the projection information. According to example embodiments, the image of the guide pattern included in the projection information may be referred to as a stored guide image.

For example, in FIG. 1, the electronic device 100 may project the guide pattern through the projector after adjusting the projection location of the projector to the first projection location. The electronic device 100 may obtain the current guide image by photographing the projection area onto which the guide pattern is projected, by using the camera.

According to an embodiment of the disclosure, the electronic device 100 may compare the current guide image with the first guide image included in the first projection information to obtain a difference therebetween.

According to an embodiment of the disclosure, when the difference is equal to or greater than a certain size, the electronic device 100 may reduce the difference. To reduce the difference, the electronic device 100 may further adjust the current projection location of the projector or warp the current guide image. Then, the electronic device 100 may output the content corresponding to the projection purpose by using the projector.

According to an embodiment of the disclosure, may obtain an image of the first projection area corresponding to the first projection location by using the camera and obtain, from the image of the first projection area, at least one of the flatness, material, color, or brightness of the first projection area.

According to an embodiment of the disclosure, the electronic device 100 may further include the illumination sensor. According to an embodiment of the disclosure, the electronic device 100 may identify the ambient brightness through the illumination sensor.

According to an embodiment of the disclosure, the electronic device 100 may output the first content by adjusting, based on at least one of flatness, material, color, brightness of the first projection area, or the ambient brightness, at least one of a form, a color, or luminance of the first content corresponding to the first projection purpose.

Alternatively, as described above, when the correction value for adjusting at least one of the form, color, or luminance of the first content corresponding to the first projection purpose is included in the first projection information, the electronic device 100 may obtain the correction value from the first projection information and output the first content by adjusting at least one of the form, color, or luminance of the first content corresponding to the first projection purpose by using the correction value.

A reference numeral 103 of FIG. 1 illustrates a case where the user selects third projection information among the projection information included in the projection information list. When the user selects the third projection information, the electronic device 100 may identify a third projection location and a third projection purpose, which are included in the third projection information.

According to an embodiment of the disclosure, the electronic device 100 may adjust the projection direction of the projector to the third projection location. As shown in the reference numeral 103 of FIG. 1, content B may be projected onto a table.

According to an embodiment of the disclosure, the electronic device 100 may adjust the projection location of the projector to the third projection location, project the guide pattern, and then perform keystone correction on the guide pattern.

According to an embodiment of the disclosure, when a keystone correction amount of the guide pattern is included in the third projection information, the electronic device 100 may obtain the keystone correction amount from the third projection information and perform keystone correction on the guide pattern projected by the projector, based on the keystone correction amount.

According to an embodiment of the disclosure, the electronic device 100 may obtain the current guide image by photographing the projection area onto which the guide pattern is projected, by using the camera.

According to an embodiment of the disclosure, the electronic device 100 may compare the current guide image with a third guide image included in the third projection information to obtain a difference therebetween.

According to an embodiment of the disclosure, when the difference is within a certain range, the electronic device 100 may further adjust the current projection location of the projector or warp the current guide image so that the difference is reduced.

According to an embodiment of the disclosure, the electronic device 100 may output, from the third projection location, the content B that is third content corresponding to the third projection purpose.

According to an embodiment of the disclosure, when the correction value for adjusting at least one of the form, color, or luminance of the content corresponding to the projection purpose is included in the projection information, the electronic device 100 may obtain the correction value from the projection information and adjust at least one of a form, color, or luminance of the third content corresponding to the third projection purpose by using the correction value.

According to an embodiment of the disclosure, when the correction value for adjusting the content corresponding to the projection purpose is not included in the projection information, the electronic device 100 may adjust the projection location of the projector to the third projection location and photograph a projection plane with the camera to identify flatness, material, color, or brightness of the table that is the projection plane. Also, the electronic device 100 may identify the ambient brightness through the illumination sensor.

According to an embodiment of the disclosure, the electronic device 100 may output the third content by adjusting, based on at least one of flatness, material, color, or brightness of the projection area, or the ambient brightness, at least one of a form, a color, or luminance of the third content corresponding to the third projection purpose.

The projection purposes may include, in addition to a purpose of outputting content, a purpose of receiving information.

According to an embodiment of the disclosure, when the projection purposes include the purpose of receiving information in addition to the purpose of outputting content, the electronic device 100 may receive information corresponding to content output by using the camera and/or another sensor.

For example, in the reference numeral 103 of FIG. 1, the third projection purpose included in the third projection information may be a projection keyboard purpose. According to an embodiment of the disclosure, the electronic device 100 may output the content B corresponding to the projection keyboard purpose. The content B corresponding to the projection keyboard purpose may include input keys like an actual keyboard.

Like using the actual keyboard, the user may type various keys included in the content B that is a virtual keyboard shape content.

According to an embodiment of the disclosure, the electronic device 100 may receive information corresponding to content output by using the camera or the sensor. For example, the electronic device 100 may obtain movement information of the user's finger pressing a key included in a virtual keyboard by using the camera and/or an infrared sensor. The electronic device 100 may identify a key selected by the user by using a location of the user's finger or the movement information of the user's finger, and perform a corresponding operation. Alternatively, the electronic device 100 may be connected to an external electronic device connected through a communication network and transmit, to the external electronic device, information input based on the content output.

For example, in the reference numeral 103 of FIG. 1, the electronic device 100 may transmit, to a computer that is an external electronic device 105, the location or movement information of the finger obtained by using the camera or the sensor. The computer may receive the location or movement information of the finger from the electronic device 100 and recognize the same as input to the computer. The computer may perform an operation corresponding to the input.

As such, according to an embodiment of the disclosure, the user may store a projection location and a projection purpose, which are frequently used by the user, as projection information.

Also, by only performing an operation of selecting desired projection information from the projection information list, the user may cause the electronic device 100 to project, from a specific projection location, content according to a specific projection purpose. The electronic device 100 may satisfy needs of the user by performing operations according to various projection purposes from various projection locations according to projection information.

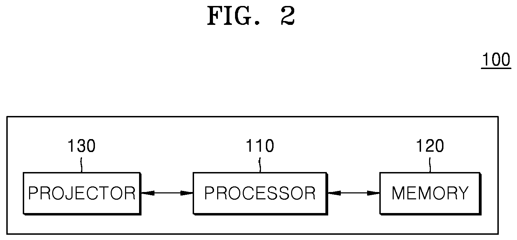

FIG. 2 is a block diagram of the electronic device 100 according to an embodiment of the disclosure.

The electronic device 100 of FIG. 2 may be an example of the electronic device 100 of FIG. 1.

Referring to FIG. 2, the electronic device 100 may include a processor 110, a memory 120, and a projector 130.

The projector 130 according to an embodiment of the disclosure may be a component configured to externally project light for representing an image or content. The projector 130 may also be referred to as a head or a projection unit. The projector 130 may include various detailed components, such as a light source, a projection lens, and a reflector.

The projector 130 may project an image in various projection methods, for example, a cathode-ray tube (CRT) method, a liquid crystal display (LCD) method, a digital light processing (DLP) method, and a laser method.

The projector 130 may include various types of light sources. For example, the projector 130 may include at least one light source from among a lamp, a light-emitting diode (LED), and a laser.

The projector 130 may output the image in a 4:3 aspect ratio, a 5:4 aspect ratio, or a 16:9 wide aspect ratio, according to a purpose of the electronic device 100 or user setting, and may output an image in various types of resolution, such as WVGA (854*480), SVGA (800*600), XGA (1024*768), WXGA (1180*720), WXGA (1180*800), SXGA (1180*1024), UXGA (1600*1100), full HD (1920*1080), according to an aspect ratio.

The projector 130 may perform various functions for adjusting an output image. For example, the projector 130 may perform functions, such as zoom, keystone correction, and lens shift. The projector 130 may perform a zoom function, a keystone correction function, and a focus adjustment function, by analyzing a surrounding environment and a projection environment according to control by the user or automatically without the control by the user.

The projector 130 may use a red, green, blue (RGB) LED light source as the light source. Alternatively, the projector 130 may use a white light source as the light source, instead of a red LED, a green LED, and a blue LED.

The projector 130 may include a digital micromirror device (DMD). The projector 130 may form a pattern by controlling each of a plurality of mirrors included in the DMD. The DMD is an assembly of fine mirrors, and tens of thousands of mirrors are arranged like a checkerboard and each mirror may act as a pixel. The projector 130 may control the mirrors included in the DMD to be on or off. The mirrors have different inclinations in on and off states, and accordingly, brightness is adjusted as light is transmitted or not transmitted.

According to an embodiment of the disclosure, the projector 130 may rotate in a x-, y-, or z-axis when the locations of the projector 130, the connector, and the stand are adjusted.

The memory 120 according to an embodiment of the disclosure may store at least one instruction.

The memory 120 may store at least one program executed by the processor 110. Also, the memory 120 may store data input to or output from the electronic device 100.

The memory 120 may include at least one type of storage medium among a flash memory type, a hard disk type, a multimedia card micro type, a card type memory (for example, a secure digital (SD) or an extreme digital (XD) memory), random access memory (RAM), static RAM (SRAM), read-only memory (ROM), electrically erasable programmable ROM (EEPROM), programmable ROM (PROM), a magnetic memory, a magnetic disk, and an optical disk.

According to an embodiment of the disclosure, the memory 120 may store the projection information list. The projection information list may include at least one piece of projection information. According to an embodiment of the disclosure, the projection information may be identified by unique identification information.

When projection information selected by the user among the projection information included in the projection information list is the first projection information, the first projection information may include the first projection location and the first projection purpose as one set.

According to an embodiment of the disclosure, the first projection purpose may include at least one of a lighting purpose, an application output purpose, a display purpose, an external device content output purpose, a projection keyboard purpose, or a scanner purpose. The application output purpose may indicate outputting content corresponding to various applications executable by the electronic device 100, for example, a calendar, a clock, a weather, a temperature, a map, navigation, and a notepad. The display purpose may indicate the electronic device 100 projecting corresponding content onto a monitor or a television screen.

According to an embodiment of the disclosure, the first projection information may further include the keystone correction amount of the guide pattern.

According to an embodiment of the disclosure, the first projection information may further include the first guide image that is an image of the projection area onto which the guide pattern is projected. The guide image may also be referred to as an image of the guide pattern.

According to an embodiment of the disclosure, the first projection information may further include the correction value for adjusting at least one of the form, color, or luminance of the content corresponding to the first projection purpose selected by the user.

According to an embodiment of the disclosure, the memory 120 may store at least one instruction for obtaining, from a projection plane image obtained with the camera, at least one of the flatness, material, color, or brightness of the projection area.

According to an embodiment of the disclosure, the memory 120 may store at least one instruction for adjusting at least one of the form, color, or luminance of the first content corresponding to the first projection purpose, by using the correction value included in the first projection information or based on at least one of the flatness, material, color, brightness of the projection area, or the ambient brightness.

According to an embodiment of the disclosure, the memory 120 may store at least one instruction for receiving selection of one piece of projection information among the projection information included in the projection information list.

According to an embodiment of the disclosure, the memory 120 may store at least one instruction for adjusting the projection location of the projector 130 to the first projection location included in the first projection information, based on the first projection information being selected.

According to an embodiment of the disclosure, the memory 120 may store at least one instruction for controlling the driver configured to adjust the location of at least one of the stand, the projector 130, or the connector.

According to an embodiment of the disclosure, the memory 120 may store at least one instruction for receiving information corresponding to first content output. For example, when the first projection purpose is the projection keyboard purpose or the scanner purpose, the memory 120 may store at least one instruction for receiving the information corresponding to the first content output by using the camera or the sensor.

According to an embodiment of the disclosure, the memory 120 may store at least one instruction for adjusting the location of the projector 130 to a projection location according to projection information, based on receiving the selection of the projection information from the user, projecting the guide pattern from the adjusted location, and obtaining the current guide image by photographing the projection area onto which the guide pattern is projected.

According to an embodiment of the disclosure, the memory 120 may store at least one instruction for obtaining the difference between the current guide image and the first guide image included in the projection information.

According to an embodiment of the disclosure, the memory 120 may store at least one instruction for, when the difference is included in the first reference range but not included in the second reference range smaller than the first reference range, adjusting the difference to be within the second reference range.

According to an embodiment of the disclosure, the memory 120 may store at least one instruction for further adjusting the current projection location by controlling the driver.

According to an embodiment of the disclosure, the memory 120 may store at least one instruction for warping the current guide image.

According to an embodiment of the disclosure, the memory 120 may store at least one instruction for outputting information about guidance of location movement when the difference is not included in the first reference range.

According to an embodiment of the disclosure, the memory 120 may store at least one instruction for receiving a request to generate projection information through the user input unit.

Hereinafter, projection information generated upon receiving the request to generate the projection information from the user through the user input unit will be referred to as second projection information. The second projection information may be information including a second projection location and a second projection purpose as one set.

According to an embodiment of the disclosure, the memory 120 may store at least one instruction for determining the current projection location of the projector 130 as the second projection location, based on receiving the request to generate the projection information.

According to an embodiment of the disclosure, the memory 120 may store at least one instruction for recommending a projection location based on the surrounding image obtained with the camera, in response to receiving the request to generate the projection information.

According to an embodiment of the disclosure, the memory 120 may store at least one instruction for determining a projection location selected by the user from among recommended projection locations as the second projection location.

According to an embodiment of the disclosure, the memory 120 may store at least one instruction for determining a projection purpose selected through the user input unit as the second projection purpose.

According to an embodiment of the disclosure, the memory 120 may store at least one instruction for recommending at least one projection purpose based on at least one of the second projection location or the second projection area corresponding to the second projection location.

According to an embodiment of the disclosure, the memory 120 may store at least one instruction for determining, as the second projection purpose, a projection purpose selected by the user from among the recommended at least one projection purpose.

According to an embodiment of the disclosure, the memory 120 may store at least one instruction for recommending at least one projection purpose based on at least one of a material, color, or size of the second projection area corresponding to the second projection location.

According to an embodiment of the disclosure, the memory 120 may store at least one instruction for projecting the guide pattern onto the second projection area from the second projection location by controlling the projector 130, performing keystone correction on the projected guide pattern, and storing the second projection information by including a keystone correction amount of the guide pattern to the second projection information.

According to an embodiment of the disclosure, the memory 120 may store at least one instruction for projecting the guide pattern onto the second projection area from the second projection location by controlling the projector 130, performing keystone correction on the projected guide pattern, obtaining the second guide image of the second projection area onto which the keystone corrected guide pattern is projected, and storing the second projection information by including the second guide image to the second projection information.

According to an embodiment of the disclosure, the memory 120 may store at least one instruction for obtaining at least one of the flatness, material, color, or brightness of the projection area from an image obtained by photographing the projection plane from the second projection location with the camera, obtaining the ambient brightness through the illumination sensor, and storing the second projection information by including, to the second projection information, correction information for correcting at least one of a form, color, or luminance of second content corresponding to the second projection purpose, based on at least one of the flatness, material, color, brightness of the projection area, or the ambient brightness.

According to an embodiment of the disclosure, the electronic device 100 may include at least one processor 110. The processor 110 according to an embodiment of the disclosure may control overall operations of the electronic device 100.

The at least one processor 110 may execute the at least one instruction stored in the memory 120 to control the electronic device 100 to operate.

According to an embodiment of the disclosure, the at least one processor 110 may execute the at least one instruction to receive the selection of the first projection information including the first projection location and the first projection purpose, among at least one piece of projection information included in the projection information list.

According to an embodiment of the disclosure, the at least one processor 110 may adjust the projection direction of the projector 130 to the first projection location, based on the first projection information, and output the first content corresponding to the first projection purpose from the first projection location.

According to an embodiment of the disclosure, the at least one processor 110 may adjust the projection direction of the projector 130 to the first projection location by controlling the driver configured to adjust a location of at least one of the stand, the projector 130, or the connector.

According to an embodiment of the disclosure, when the first projection information includes the correction value of the first content corresponding to the first projection purpose, the at least one processor 110 may output the first content by correcting the first content by using the correction value.

According to an embodiment of the disclosure, when the correction value of the first content corresponding to the first projection purpose is not included in the first projection information, the at least one processor 110 may obtain, from the projection plane image, at least one of the flatness, material, color, or brightness of the projection area, obtain the ambient brightness through the illumination sensor, and output the first content by adjusting at least one of the form, color, or luminance of the first content corresponding to the first projection purpose, based on at least one of the flatness, material, color, brightness of the projection area, or the ambient brightness.

According to an embodiment of the disclosure, when the first projection purpose is one of the projection keyboard purpose and the scanner purpose, the at least one processor 110 may receive information corresponding to the first content output by using the camera.

According to an embodiment of the disclosure, when the first projection purpose is the projection keyboard purpose, the at least one processor 110 may receive the information corresponding to the first content output by using the camera and the infrared sensor together.

According to an embodiment of the disclosure, the first projection information may include the first guide image, and the first guide image may be an image about the guide pattern projected from the first projection location when the first projection information is generated.

According to an embodiment of the disclosure, the at least one processor 110 may obtain the current guide image by projecting the guide pattern from the first projection location adjusted based on the first projection information, and obtain the difference between the current guide image and the first guide image.

According to an embodiment of the disclosure, when the difference is included in the first reference range but not included in the second reference range smaller than the first reference range, the at least one processor 110 may perform at least one of warping the current guide image or further adjusting the current projection location by controlling the driver so that the difference is within the second reference range.

According to an embodiment of the disclosure, when the difference is not included in the first reference range, the at least one processor 110 may output the information about guidance of location movement.

According to an embodiment of the disclosure, the at least one processor 110 may receive, from the user, the request to generate the projection information.

According to an embodiment of the disclosure, the at least one processor 110 may obtain the surrounding image, i.e., at least one of a surrounding space image or surrounding space depth information, and obtain information about a surrounding space based on the surrounding image.

According to an embodiment of the disclosure, in response to receiving the request to generate the projection information from the user, the at least one processor 110 may recommend the projection location based on at least one of the information about the surrounding space or the current projection location of the projector 130.

According to an embodiment of the disclosure, the at least one processor 110 may determine a projection location selected from the recommended projection locations as the second projection location.

According to an embodiment of the disclosure, the at least one processor 110 may receive, from the user, the selection of the second projection purpose. The processor 110 may generate the second projection information including the second projection location and the second projection purpose as one set.

According to an embodiment of the disclosure, the at least one processor 110 may recommend at least one projection purpose based on at least one of the second projection location or the second projection area corresponding to the second projection location, and determine, as the second projection purpose, a projection purpose selected through the user input unit from among the recommended at least one projection purpose.

According to an embodiment of the disclosure, the at least one processor 110 may recommend at least one projection purpose based on at least one of the second projection location, the material, color, or size of the second projection area corresponding to the second projection location.

According to an embodiment of the disclosure, the at least one processor 110 may control the projector 130 to project the guide pattern onto the second projection area from the second projection location, and perform keystone correction on the projected guide pattern.

According to an embodiment of the disclosure, the at least one processor 110 may store the second projection information by including the keystone correction amount of the guide pattern by controlling the projector 130.

According to an embodiment of the disclosure, the at least one processor 110 may obtain the second guide image of the second projection area onto which the keystone corrected guide pattern is projected.

According to an embodiment of the disclosure, the at least one processor 110 may store the second projection information by including the second guide image to the second projection information.

According to an embodiment of the disclosure, the at least one processor 110 may obtain at least one of the flatness, material, color, or brightness of the projection area from the image obtained by photographing the projection plane from the second projection location. The at least one processor 110 may obtain the ambient brightness through the illumination sensor.

According to an embodiment of the disclosure, the at least one processor 110 may store the second projection information by including, to the second projection information, correction information for correcting at least one of the form, color, or luminance of the second content corresponding to the second projection purpose, based on at least one of the flatness, material, color, brightness of the projection area, or the ambient brightness.

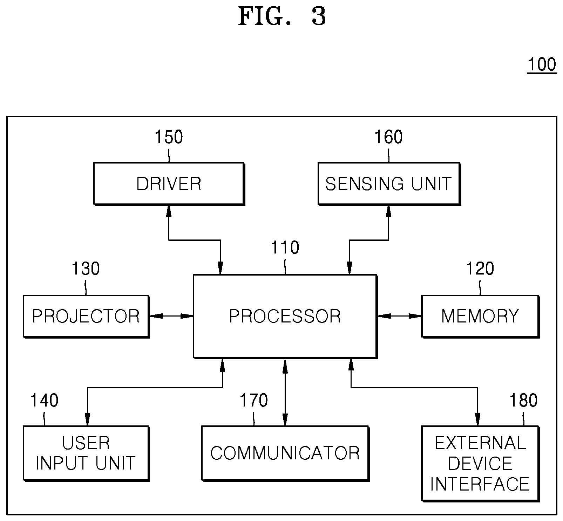

FIG. 3 is an internal block diagram of the electronic device 100 according to an embodiment of the disclosure.

The electronic device 100 of FIG. 3 may be an example of the electronic device 100 of FIG. 1 or 2.

Referring to FIG. 3, according to an embodiment of the disclosure, the electronic device 100 may further include, in addition to the processor 110, the memory 120, and the projector 130, a user input unit 140, a driver 150, a sensing unit 160, a communicator 170, and an external device interface 180. Hereinafter, descriptions overlapping those described with reference to FIG. 1 or 2 are omitted.

The user input unit 140 according to an embodiment of the disclosure may receive a user input for controlling the electronic device 100. The user input unit 140 may include various types of user input devices including a touch panel for detecting the user's touch, a touchpad (a contact capacitance type, a pressure resistive type, an infrared detection type, a surface ultrasonic conduction type, an integral tension measurement type, or a piezo-effect type), a button receiving a push manipulation of the user, a jog wheel receiving a rotation manipulation of the user, a jog switch, a keyboard, a keypad, a dome switch, a microphone for voice recognition, and a motion detection sensor sensing motion, but is not limited thereto.

According to an embodiment of the disclosure, the user input unit 140 may be provided in the stand of the electronic device 100. The user input unit 140 may be provided at the top or side of the stand or at the body of the stand.

According to an embodiment of the disclosure, when the electronic device 100 is manipulated by a control device (remote controller), the user input unit 140 may receive a control signal from the control device.

According to an embodiment of the disclosure, the control device configured to control the electronic device 100 may be a remote controller dedicated to the electronic device 100, which controls only the electronic device 100, or an integrated remote controller configured to control other electronic devices together. According to an embodiment of the disclosure, the electronic device 100 may be controlled by a smartphone or a computer. For example, the user may install, on the smartphone, an application for controlling the electronic device 100 and execute the application to control various functions of the electronic device 100. Alternatively, the user may web-browse a site for controlling the electronic device 100 by using the computer and control various functions of the electronic device 100 at the site.

According to an embodiment of the disclosure, the user input unit 140 may receive a control signal from the user. The user may input a control signal to generate projection information by using the user. The user may transmit, to the electronic device 100, the control signal to generate projection information by using a smartphone application or by selecting a specific button of the user input unit 140 provided in the electronic device 100, for example, a button or a key provided in the stand included in the electronic device 100.

According to an embodiment of the disclosure, the user input unit 140 may receive, from the user, selection of a projection location and/or a projection purpose for generating projection information.

According to an embodiment of the disclosure, the user may directly set the projection location by physically directly adjusting a location, a height, an angle, or the like of the projector 130, the connector, or the stand.

According to an embodiment of the disclosure, when the user is able to electrically control the location of the projector 130 or the driver 150 by using the user input unit 140, the user may adjust the projection location of the projector 130 by using a jog or a wheel or by using the key or button provided in the user input unit 140.

According to an embodiment of the disclosure, when the electronic device 100 recommends the projection location or the projection purpose by analyzing an image on a projection plane, the user may select the projection location and/or the projection purpose recommended by the electronic device 100 by using the user input unit 140.

According to an embodiment of the disclosure, the user input unit 140 may receive selection of one of the pieces of projection information included in the projection information list from the user.

The driver 150 according to an embodiment of the disclosure may adjust a location of at least one of the stand, the projector 130, or the connector. According to an embodiment of the disclosure, the driver 150 may include at least one of a gear, a motor, or a reducer. According to an embodiment of the disclosure, the driver 150 may adjust a rotating angle of each of the stand, the projector 130, and the connector to freely rotate the projector 130 in the x-, y-, and z-axes.

According to an embodiment of the disclosure, when a height of the stand is adjustable, the driver 150 may adjust the height of the stand according to control by the processor 110. The driver 150 may adjust the height of the stand by increasing or decreasing a height of a portion where the stand and the connector overlap each other.

According to an embodiment of the disclosure, the driver 150 may adjust the rotating angle between the stand and the connector. Also, when two or more connectors are included in the electronic device 100, the driver 150 may adjust a rotating angle between the connectors. The driver 150 may adjust a rotating angle between the projector 130 and the connector.

According to an embodiment of the disclosure, the sensing unit 160 may include a sensor. The senor may obtain sensing information by detecting a state of the electronic device 100 or a state around the electronic device 100, and transmit the sensing information to the processor 110.

According to an embodiment of the disclosure, the sensing unit 160 may include an image sensor. According to an embodiment of the disclosure, the image sensor may include a camera. The camera may photograph a subject at a location adjacent to the projector 130. The camera may include a lens and a sensor, such as a charge-coupled device (CCD) or a complementary metal-oxide semiconductor (CMOS), and may obtain an image formed on a screen by photographing the subject. The image sensor may convert information about the subject formed by light into an electrical signal. Also, the image sensor may perform, on the captured image, one or more signal processes from among auto exposure (AE), auto white balance (AWB), color recovery, correction sharpening, gamma, and lens shading correction.

According to an embodiment of the disclosure, the sensing unit 160 may include a depth sensor. The depth sensor may calculate a distance between the camera and the subject by using a time taken for light emitted towards the subject to return after being reflected at the subject, for example, the projection plane, and obtain information about a space where the subject is located. According to an embodiment of the disclosure, the depth sensor may recognize 3-dimensional (3D) depth in one of a stereo type method, a time-of-flight (ToF) method, and a structured pattern method.

The depth sensor may be included in the electronic device 100 as a module or block separated from the image sensor, but is not limited thereto, and the depth sensor may be included in the image sensor. For example, the depth sensor may be included in a camera having a depth function from among cameras, and obtain the distance to the subject when the image of the subject is obtained.

The sensing unit 160 may further include at least one of a location sensor, an acceleration sensor, or a gyro sensor. The sensing unit 160 may detect a direction of the electronic device 100 by using at least one of the location sensor, the acceleration sensor, or the gyro sensor.

According to an embodiment of the disclosure, the sensing unit 160 may obtain raw data for estimating the rotating angle of the electronic device 100 by using at least one of the location sensor, the acceleration sensor, or the gyro sensor. According to an embodiment of the disclosure, the processor 110 may identify the rotating angle of the electronic device 100 with respect to three axes, i.e., the x-axis, the y-axis, and the z-axis, based on the raw data obtained through the sensing unit 160.

The sensing unit 160 may include the illumination sensor. The sensing unit 160 may detect brightness around the electronic device 100 by using the illumination sensor.

The communicator 170 according to an embodiment of the disclosure may connect the electronic device 100 to a peripheral device, an external device, or a server, according to control by the processor 110. The communicator 170 may include at least one of a wireless local area network (LAN), Bluetooth, or wired Ethernet, based on the performance and structure of the electronic device 100.

According to an embodiment of the disclosure, the communicator 170 may communicate with at least one external electronic device or external server through a wired or wireless communication network. The communicator 170 may receive a video or an image from the external electronic device or external server, receive content corresponding to a projection purpose, or download various applications.

According to an embodiment of the disclosure, the communicator 170 may include at least one short-range communication module performing communication according to a communication standard, such as Bluetooth, Wi-Fi, Bluetooth low energy (BLE), NFC/RFID, Wi-Fi direct, UWB, or ZigBee.

Also, the communicator 170 may further include a long-range communication module performing communication with a server for supporting long-range communication according to the long-range communication standard. In particular, the communicator 170 may include the long-range communication module performing communication through a network for Internet communication. For example, the communicator 170 may include the long-range communication module performing communication through a communication network according to the communication standard, such as third generation (3G), fourth generation (4G), and/or fifth generation (5G).

According to an embodiment of the disclosure, the communicator 170 may receive a control signal through a control device, such as a remote controller or a smartphone. The control signal may be a Bluetooth type, a radio frequency (RF) signal type, or a Wi-Fi type.

The external device interface 180 according to an embodiment of the disclosure may perform communication by being connected to the external electronic device via wires. According to an embodiment of the disclosure, the external device interface 180 may include at least one port to be connected to the external electronic device via a wired cable.

According to an embodiment of the disclosure, the external device interface 180 may include at least one of a high-definition multimedia interface (HDMI) port, a component jack, a personal computer (PC) port, or a universal serial bus (USB) port.

According to an embodiment of the disclosure, the external device interface 180 may be provided at one region of the electronic device 100. For example, the external device interface 180 may be provided on a rear surface of a support of the stand included in the electronic device 100. The electronic device 100 may receive an external input signal from an external device through the external device interface 180 and output the same through the electronic device 100.

According to an embodiment of the disclosure, the external device interface 180 may receive additional information, such as video (for example, a moving image signal or a still image signal), audio (for example, a voice signal or a music signal), and metadata, from a device outside the electronic device 100.

According to an embodiment of the disclosure, the at least one processor 110 may recommend the projection location, based on receiving, from the user, the request to generate the projection information.

According to an embodiment of the disclosure, the processor 110 may obtain information about the surrounding space through the sensing unit 160. According to an embodiment of the disclosure, the projector 130 of the electronic device 100 is rotatable in a certain angle or greater in each of the x-, y-, and z-axes, and thus, the sensing unit 160 provided near the projector 130 may also rotate with the projector 130 to obtain images of the surrounding space in a plurality of angles.

According to an embodiment of the disclosure, the processor 110 may obtain the surrounding space depth information through the depth sensor. According to an embodiment of the disclosure, the surrounding space depth information may denote distance information to an environment or structure of the surrounding space.

According to an embodiment of the disclosure, the processor 110 may obtain the information about the surrounding space, based on at least one of the surrounding space image or the surrounding space depth information, which is obtained through the sensing unit 160. According to an embodiment of the disclosure, the processor 110 may obtain the information about the surrounding space by connecting, in dots, lines, or surfaces, the environment of the surrounding space, surfaces or locations of objects arranged in the surrounding space, and geometry information. According to an embodiment of the disclosure, the processor 110 may obtain color information and depth information according to a rotating angle of the projector 130 for each axis.

According to an embodiment of the disclosure, the processor 110 may recommend the projection location, based on the information about the surrounding space.

According to an embodiment of the disclosure, the processor 110 may identify an area that is not too curved and is even from among projection spaces, based on the information about the surrounding space, and recommend a flat area as the projection location.

When a color of the projection plane is dark, projected light appears dark because, even when light is projected with same brightness or luminance, the amount of light reflected from an object is small. According to an embodiment of the disclosure, the processor 110 may recommend, as the projection location, an area in which the color of the projection plane is brighter than specific luminance, based on the information about the surrounding space.

According to an embodiment of the disclosure, the processor 110 may identify a location where a keystone corrected projection image may be projected widest, based on the information about the surrounding space, and recommend the same as the projection location.

According to an embodiment of the disclosure, the processor 110 may recommend a projection purpose. According to an embodiment of the disclosure, the processor 110 may recommend the projection purpose appropriate to the projection location, based on at least one of the information about the surrounding space or the projection location.

According to an embodiment of the disclosure, the processor 110 may identify whether the projection location faces a wall or a partition, faces above a table, or faces a ceiling, based on the information about the surrounding space and the projection location of the projector 130, i.e., the rotating angle for each of x-, y-, and z-axes.

For example, when it is determined that the projection location faces a wall or a partition, the processor 110 may recommend a dual monitor purpose or an application execution purpose as the projection purpose. For example, when it is determined that the projection location faces above a table, the processor 110 may recommend a scan function, a virtual keyboard function, or a lighting function as the projection purpose. For example, when it is determined that the projection location faces a ceiling, the processor 110 may recommend a sleep function or the like as the projection purpose.

According to an embodiment of the disclosure, the processor 110 may predict a size of the projection plane, based on at least one of the information about the surrounding space or the projection location of the projector 130. According to an embodiment of the disclosure, the processor 110 may recommend another projection purpose according to the size of the projection plane. For example, when the size of the projection plane is a certain size or smaller, the processor 110 may recommend an application execution/output purpose, such as a clock or a calendar, as the projection purpose. For example, when the size of the projection plane is larger than the certain size, the processor 110 may recommend a display device purpose, such as a dual monitor, or an external device content output purpose, as the projection purpose.

When the user selects the first projection information among pre-stored projection information, the processor 110 may correct and output a shape of the first content corresponding to the first projection purpose, based on the projection location and the information about the surrounding space.

According to an embodiment of the disclosure, the processor 110 may correct the shape of the first content, such as the color, brightness, form, and size of the first content. For example, when the first projection area corresponding to the first projection location is darker than reference brightness, the processor 110 may project the first content after correcting the brightness of the first content to be brighter than original brightness. For example, when the first projection area is redder than a reference area, the processor 110 may project the first content after correcting the color of the first content so that a red portion of the first content is reduced.

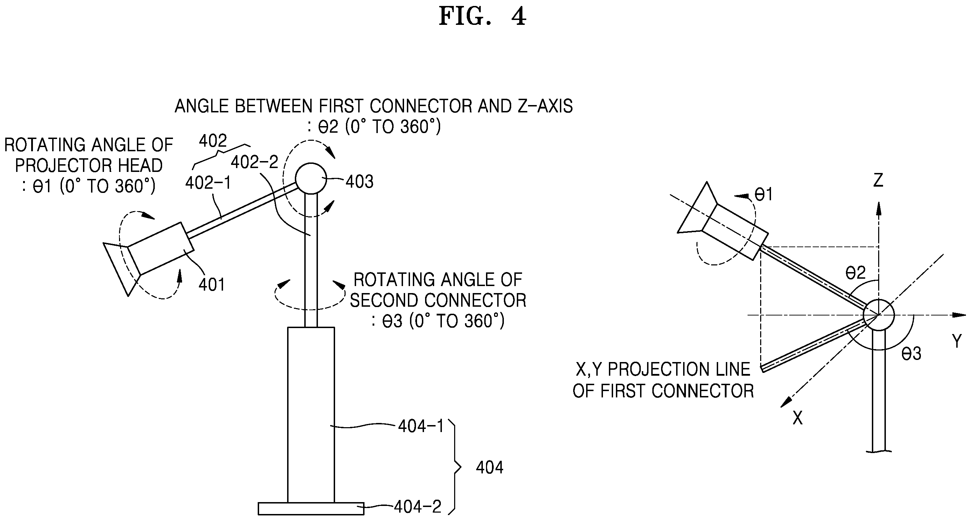

FIG. 4 is a diagram for describing the electronic device 100 adjusting a projection location, according to an embodiment of the disclosure.

Referring to FIG. 4, the electronic device 100 may include a header 401, a connector 402, and a stand 404. The electronic device 100 shown in FIG. 4 is an example, and structures or shapes of the header 401, connector 402, and stand 404 may vary.

According to an embodiment of the disclosure, the header 401 is a component configured to project light and may be included in the projector 130.

The stand 404 may operate as a support for holding the electronic device 100. The stand 404 may support the electronic device 100 such that the electronic device 100 is erected. The stand 404 may include other components, for example, a body portion 404-1 for supporting the connector 402 and a support 404-2 for maintaining the stand 404 in an erected position.

However, the electronic device 100 shown in FIG. 4 is an example and the electronic device 100 may not include the stand 404 and may attached to and hang on a wall or ceiling.

The connector 402 may be a component connecting the header 401 and the stand 404 to each other. The connector 402 may be referred to as an arm or a skeleton. According to an embodiment of the disclosure, the electronic device 100 may include one or more connectors 402.

In FIG. 4, the electronic device 100 includes two connectors 402, i.e., a first connector 402-1 and a second connector 402-2. However, this is only an example, and the electronic device 100 may include one connector 402 or three or more connectors 402.

According to an embodiment of the disclosure, the header 401 may be rotatably connected to the first connector 402-1. The header 401 and the first connector 402-1 may be rotatably connected to each other by using a motor. The header 401 may rotate from 0° to 360° by using a straight line extending from the first connector 402-1 as a rotating axis. Hereinafter, a rotating angle of the header 401 will be referred to as θ1.

In FIG. 4, the first connector 402-1 may connect the header 401 and a joint 403 to each other, and the second connector 402-2 may connect the joint 403 and the stand 404 to each other.

As shown in FIG. 4, when the electronic device 100 includes a plurality of connectors 402, the plurality of connectors 402 may be rotatably combined by the joint 403. The joint 403 may also be referred to as a hinge. According to an embodiment of the disclosure, the joint 403 may include a motor to rotatably combine the first connector 402-1 and the second connector 402-2 to each other.

For example, on an X-Y-Z coordinate system, when the support 404-2 is located on an XY plane formed by an X-axis and a Y-axis, the second connector 402-2 is parallel to a Z-axis.

According to an embodiment of the disclosure, the first connector 402-1 may rotate in a circle on a YZ plane that is a horizontal plane formed by the Y-axis and the Z-axis. In other words, the first connector 402-1 may rotate by using the X-axis as a rotating axis. The first connector 402-1 may rotate along the X-axis while forming the rotating angle from 0° to 360° with the Z-axis. The rotating angle of the first connector 402-1 will be referred to as θ2.

According to an embodiment of the disclosure, when θ2 is 0°, content may be projected onto a ceiling. According to an embodiment of the disclosure, when θ is 90°, content projected from a projection location may be projected onto a wall or a partition. According to an embodiment of the disclosure, when θ2 is 180°, the content projected from the projection location may be projected onto a table or floor surface where the support 404-2 of the stand 404 is located.

According to an embodiment of the disclosure, the second connector 402-2 may be rotatably connected to the stand 404. A motor is provided between the second connector 402-2 and the body portion 404-1, and thus, the second connector 402-2 may rotate from 0° to 360° in the Z-axis on the XY plane by using the Z-axis as a rotating axis, by the motor. The rotating angle of the second connector 402-2 will be referred to as θ3.

According to an embodiment of the disclosure, the driver 150 may adjust each of θ1, θ2, and θ3, which are the rotating angles of the header 401, first connector 402-1, and second connector 402-2, by using at least one of the gear, the motor, or the reducer.

According to an embodiment of the disclosure, the projection location of the projector 130 may be determined by a combination of θ1, θ2, and θ3, which are the rotating angles of the header 401, first connector 402-1, and second connector 402-2.

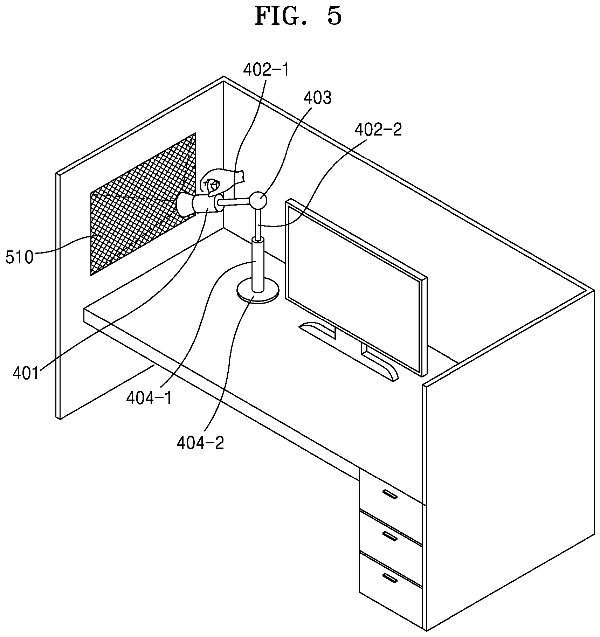

FIG. 5 illustrates the user directly adjusting a projection location of the electronic device 100, according to an embodiment of the disclosure.

According to an embodiment of the disclosure, the electronic device 100 may output a guide pattern 510 to notify the projection location to the user.

As shown in FIG. 5, the user may directly set a projection direction by directly adjusting the rotating angles of the header 401, the first connector 402-1, and the second connector 402-2. For example, the user may directly adjust the rotating angles of the header 401, the first connector 402-1, and the second connector 402-2.

The user may adjust the projection location to a desired location by directly adjusting the rotating angles of the header 401, the first connector 402-1, and the second connector 402-2 while looking at a location where the guide pattern 510 is formed.

Then, the user may request generation of projection information by using the user input unit 140.

According to an embodiment of the disclosure, when the user requests generation of projection information, the electronic device 100 may store a current projection location of a projector in projection information.

According to an embodiment of the disclosure, the electronic device 100 may project the guide pattern 510 from the current projection location and perform keystone correction on the projected guide pattern 510.

According to an embodiment of the disclosure, the electronic device 100 may obtain a keystone correction amount of the guide pattern 510 or an image of the keystone corrected guide pattern 510, and store the projection information by including the keystone correction amount or the image in the projection information, together with the projection location.

However, the disclosure is not limited thereto, and according to an embodiment of the disclosure, the electronic device 100 may obtain an image by photographing the surroundings of the electronic device 100 by using the camera and determine an optimum projection area or projection plane by analyzing the surrounding image.

According to an embodiment of the disclosure, the electronic device 100 may obtain information about a surrounding space and identify at least one of a material, color, or size of the projection area from the information about the surrounding space.

According to an embodiment of the disclosure, the electronic device 100 may recommend the projection plane or a projection location corresponding to the projection plane, based on at least one of the material, color, or size of the projection area.

For example, the electronic device 100 may determine the optimum projection plane and recommend the same to the user, considering whether the projection plane is flat, a size of a keystone corrected image is a certain size or greater, or whether a color of the projection area is bright. The electronic device 100 may receive, from the user, the selection of the projection location and store the projection information by including the projection location to the projection information.

As such, according to an embodiment of the disclosure, the user or the electronic device 100 may adjust the rotating angles of the header 401, first connector 402-1, and second connector 402-2 to adjust the projection location of the projector in various directions and project content.

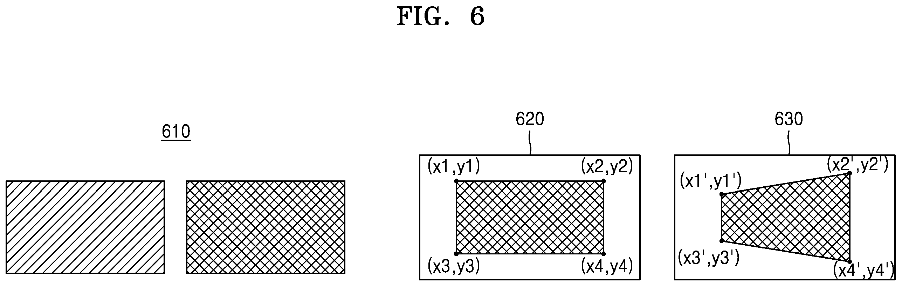

FIG. 6 is a diagram for describing the electronic device 100 comparing guide images, according to an embodiment of the disclosure.

According to an embodiment of the disclosure, when generating the projection information, the electronic device 100 may include the guide image to the projection information.

According to an embodiment of the disclosure, when generating the first projection information, the electronic device 100 may receive the selection of the first projection location and project the guide pattern onto the first projection area from the first projection location.

In FIG. 6, a reference numeral 610 shows examples of guide patterns.

According to an embodiment of the disclosure, the electronic device 100 may generate the guide pattern having a certain pattern. According to an embodiment of the disclosure, the electronic device 100 may generate pattern light by using a DMD. According to an embodiment of the disclosure, the guide pattern may have any pattern, such as a straight line pattern, a diagonal line pattern, or a grid pattern. Alternatively, the guide pattern may be a white monochromatic pattern without any design. Alternatively, the guide pattern may be a rectangle without any color inside, with only four white sides, or with only four white corners.

According to an embodiment of the disclosure, the electronic device 100 may obtain a geometric relationship between the electronic device 100 and the projection plane by using the projection location, and perform keystone correction on the guide pattern based on the geometric relationship.

According to an embodiment of the disclosure, the electronic device 100 may photograph the guide pattern that is keystone corrected by being projected onto the first projection area, by using the camera. The electronic device 100 may obtain the first guide image by photographing the projection area where the guide pattern is formed.

In FIG. 6, a reference numeral 620 shows the first guide image obtained by photographing the guide pattern projected from the first projection location.

According to an embodiment of the disclosure, the electronic device 100 may store the first projection information by including the first guide image to the first projection information.

Then, the electronic device 100 may project content from different projection locations according to different pieces of projection information. Alternatively, the user may move a support of a stand included in the electronic device 100 to a place different from an original place.

Then, when the electronic device 100 receives a control signal to operate according to the first projection information from the user through a user input unit, the electronic device 100 may identify the first projection location from the first projection information and adjust a location of a projector to the first projection location.

According to an embodiment of the disclosure, the electronic device 100 may adjust the projection location of the projector to be the first projection location included in the first projection information, by adjusting a location of at least one of the projector, the stand, or a connector.

According to an embodiment of the disclosure, the electronic device 100 may project the guide pattern from the current location adjusted to the first projection location. According to an embodiment of the disclosure, the electronic device 100 may obtain the current guide image by photographing the projection area onto which the guide pattern is projected, by using the camera.

In FIG. 6, a reference numeral 630 shows an example of the current guide image obtained by photographing the guide pattern projected from the adjusted current location.

According to an embodiment of the disclosure, the electronic device 100 may compare the current guide image 630 with the first guide image 620 included in the first projection information to obtain a difference therebetween. As described above, when the location where the support of the stand is erected is changed, there is a difference of more than a certain size between two images.

For example, the electronic device 100 may obtain coordinate values of four corners of a rectangle forming a guide pattern included in two guide images and obtain a difference between the two guide images by comparing the coordinate values. As shown in FIG. 6, the electronic device 100 may obtain coordinate values (x1, y1), (x2, y2), (x3, y3), and (x4, y4) of four corners of the guide pattern included in the first guide image 620, obtain coordinate values (x1', y1'), (x2', y2'), (x3', y3'), and (x4', y4') of four corners of the guide pattern included in the current guide image 630, and compare the coordinate values for each corner.

According to an embodiment of the disclosure, the electronic device 100 may determine whether the difference of the coordinate values between the two images exceeds a reference value. According to an embodiment of the disclosure, the electronic device 100 may, when the difference is included in the first reference range but not included in the second reference range smaller than the first reference range, adjust the difference to be within the second reference range.

According to an embodiment of the disclosure, the electronic device 100 may further adjust the current projection location by controlling a driver. For example, the electronic device 100 may adjust the projection location of the projector to be closer to the first projection location by adjusting a rotating angle of a head or connector or adjusting a height of the stand.

According to an embodiment of the disclosure, the electronic device 100 may modify the image itself by warping the current guide image.

According to an embodiment of the disclosure, the electronic device 100 may correct the guide image through geometry correction. The geometry correction is a method inversely using a principle of projection of an image.

According to an embodiment of the disclosure, the electronic device 100 may perform geometry correction by obtaining a degree of distortion of a current guide image and correcting the current guide image to be distorted in the other way around, by inversely using the degree of distortion.

According to an embodiment of the disclosure, the electronic device 100 may sample some of pixels included in the current guide image and correct locations for projecting the sampled pixels. According to an embodiment of the disclosure, the electronic device 100 may perform the geometry correction by interpolating between the pixels having the corrected locations, and compensating for the same.

According to an embodiment of the disclosure, as in a case where the difference is not included in the first reference range, when the difference is large, the electronic device 100 may determine that the difference is unable to be resolved by adjusting the projection location of the projector or warping an image. In this case, the electronic device 100 may output, to the user, information indicating to move the location of the electronic device 100.

According to an embodiment of the disclosure, the electronic device 100 may output information about guidance of location movement in various forms. For example, the electronic device 100 may provide guidance of location movement of the electronic device 100 by outputting an audio signal, vibration, flicker, or video content providing guidance of location movement.

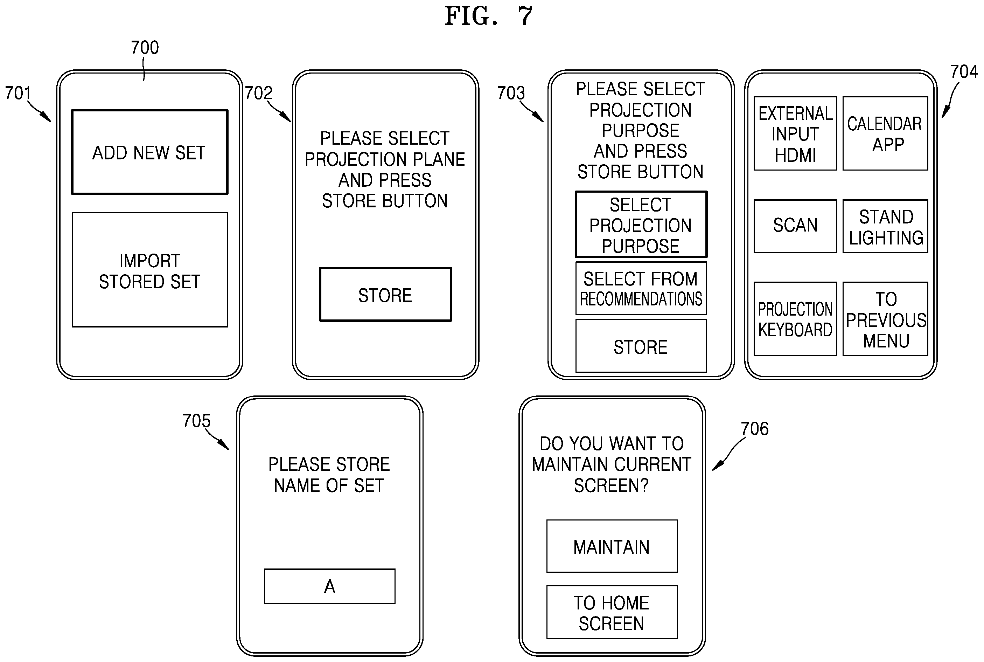

FIG. 7 illustrates the user controlling the electronic device 100 by using a control device 700 to store projection information according to an embodiment of the disclosure.

According to an embodiment of the disclosure, the electronic device 100 may be controlled by the control device 700. The electronic device 100 may be controlled according to a control signal from the control device 700, in association with the control device 700.

According to an embodiment of the disclosure, the control device 700 may be an electronic device capable of executing an application for controlling operations of the electronic device 100. For example, the control device 700 may be a smartphone.

FIG. 7 illustrates the user controlling the operations of the electronic device 100 by using the control device 700, according to an embodiment of the disclosure.

According to an embodiment of the disclosure, the control device 700 may execute an application for controlling the operations of the electronic device 100. According to an embodiment of the disclosure, the control device 700 may output a screen for controlling the operations of the electronic device 100. According to an embodiment of the disclosure, the control device 700 may display a user interface screen for receiving, from the user, selection of information about use of projection information, in the form of a text window in a partial area of a display. A size, output location, transparency, and/or shape of the user interface screen may vary.

The user may select whether to generate projection information by looking at the user interface screen output from the control device 700 and using a select button.

According to an embodiment of the disclosure, in relation to using projection information, the control device 700 may output, as shown in a reference numeral 701, an "add new set" button for newly generating projection information and an "import stored set" button for importing pre-stored projection information.

When the user selects the "add new set" button, the control device 700 may display a text window asking to select a projection plane, as shown in a reference numeral 702.

When the user selects a "store" button after selecting the projection plane or adjusting a projection location, the control device 700 may store the projection location as angle information. For example, the control device 700 may store the projection location as (θ1, θ2, θ3).

Then, as shown in a reference numeral 703, the control device 700 may display a text window asking to press a store button after selecting a projection purpose. When the user selects a "select projection purpose" button, the control device 700 may output a list of various purposes as shown in a reference numeral 704. When the user selects one of the various purposes, the control device 700 may output the screen shown in the reference numeral 703 again. The user may select a "store" button in the screen shown in the reference numeral 703 to simply store the projection information.

When the user selects a "select from recommendations" button in the screen shown in the reference numeral 703, the control device 700 may transmit, to the electronic device 100, a signal requesting to recommend projection purposes. The control device 700 may receive, from the electronic device 100, recommended projection purposes appropriate to the projection location, and output the recommended projection purposes through a screen to receive, from the user, selection of one of the recommended projection purposes.

According to an embodiment of the disclosure, as shown in a reference numeral 705, the control device 700 may output text asking to store a name of a set. The user may input the name of the set by using a number, a character, a special character, a symbol, or the like. For example, FIG. 7 illustrates that the user has input A as the name of the set.

Then, the control device 700 may output a screen asking whether to maintain a current screen as shown in a reference numeral 706. When the user selects to maintain the current screen, the control device 700 may store the projection information in which the name of the set is A. When the user selects to return to a home screen, the control device 700 may output a screen shown in the reference numeral 701 again.

As such, according to an embodiment of the disclosure, the user may simply store the projection information by using the control device 700 associated with the electronic device 100.

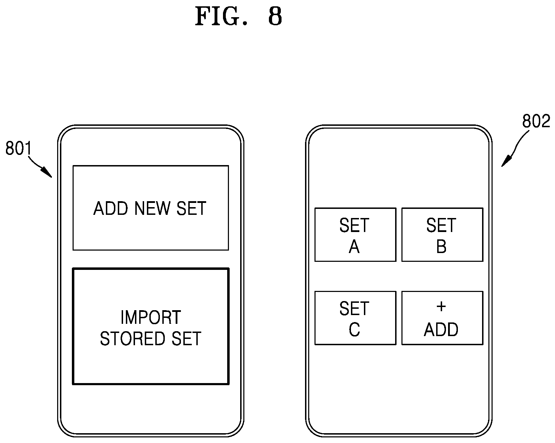

FIG. 8 illustrates the user controlling the electronic device 100 by using the control device 700 to use projection information, according to an embodiment of the disclosure.

FIG. 8 illustrates the user controlling the operations of the electronic device 100 according to pre-stored projection information, by using the control device 700, according to an embodiment of the disclosure.

According to an embodiment of the disclosure, the control device 700 may display a user interface screen for receiving, from the user, selection of information about use of projection information, in the form of a text window in a partial area of a display. A size, output location, transparency, and/or shape of the user interface screen may vary.

The user may select whether to generate projection information by looking at the user interface screen output from the control device 700 and using a select button.

According to an embodiment of the disclosure, in relation to using projection information, the control device 700 may output, as shown in a reference numeral 801, an "add new set" button for newly generating projection information and an "import stored set" button for importing pre-stored projection information.

When the user selects the "import stored set" button, the control device 700 may output a list of a plurality of pieces of projection information included in a projection information list, as shown in a reference numeral 802.

When the user selects one of the plurality of pieces of projection information included in the projection information list, the electronic device 100 associated with the control device 700 may execute the projection information selected by the user. According to an embodiment of the disclosure, the electronic device 100 may adjust a projection location according to the projection information selected by the user and output content corresponding to a projection purpose according to the projection information from the adjusted projection location.

As such, according to an embodiment of the disclosure, the user may operate the electronic device 100 according to the projection information by simply selecting the pre-stored projection information by using the control device 700 associated with the electronic device 100.

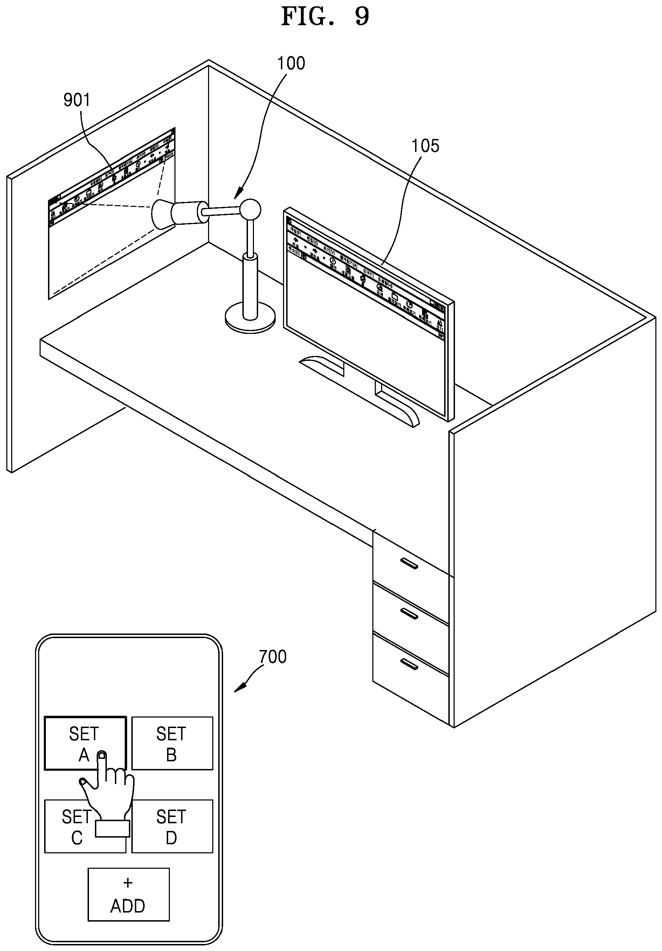

FIG. 9 illustrates the user controlling a projection operation of the electronic device 100 by using the control device 700, according to an embodiment of the disclosure.

Referring to FIG. 9, the user may control the operations of the electronic device 100 by using the control device 700 associated with the electronic device 100. The user may select desired projection information by using a button included in the user interface screen output from the control device 700.

In FIG. 9, the user has selected projection information of SET A from among a plurality of pieces of projection information. According to an embodiment of the disclosure, based on the user selecting SET A, the control device 700 may transmit, to the electronic device 100, a control signal indicating that SET A has been selected.

According to an embodiment of the disclosure, based on SET A has been selected, the electronic device 100 may identify a projection location and a projection purpose included in SET A.

According to an embodiment of the disclosure, the electronic device 100 may adjust a location of a projector to correspond to the projection location included in the projection information of SET A. According to an embodiment of the disclosure, the electronic device 100 may adjust a projection location of the projector to be the projection location included in the projection information of SET A, by adjusting a location of at least one of a head, a connector, or a stand.

According to an embodiment of the disclosure, the electronic device 100 may output, from the adjusted projection location, content according to the projection purpose. In FIG. 9, according to an embodiment of the disclosure, the projection purpose included in the projection information of SET A is a monitor expanding purpose.

According to an embodiment of the disclosure, the electronic device 100 may be connected to the external electronic device 105 through an external device interface. For example, the electronic device 100 may be connected to the external electronic device 105 through HDMI. According to an embodiment of the disclosure, the electronic device 100 may operate as a dual monitor together with the external electronic device 105 by being connected to an output terminal of the external electronic device 105 through an HDMI cable. According to an embodiment of the disclosure, the electronic device 100 may project, from the projection location, content 901 corresponding to a dual monitor purpose.

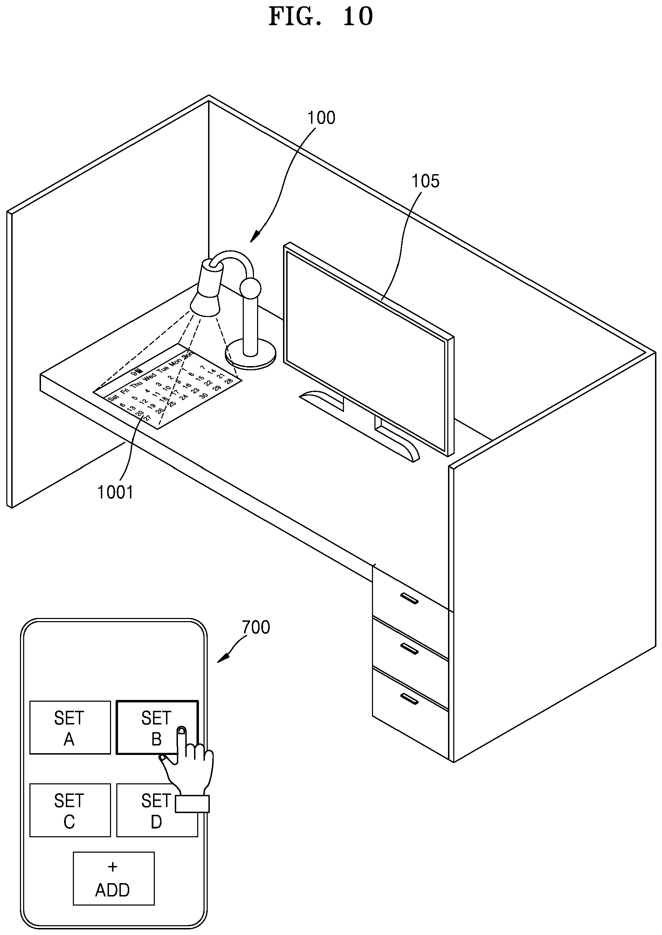

FIG. 10 illustrates the user controlling the projection operation of the electronic device 100 by using the control device 700, according to an embodiment of the disclosure.

Referring to FIG. 10, the user may select desired projection information by using the button included in the user interface screen output from the control device 700.

In FIG. 10, the user has selected projection information of SET B from among the plurality of pieces of projection information. According to an embodiment of the disclosure, the user may select SET B from the user interface screen output on the screen of the control device 700.

According to an embodiment of the disclosure, based on SET B has been selected, the electronic device 100 may identify a projection location and a projection purpose included in SET B.

According to an embodiment of the disclosure, the electronic device 100 may adjust the projection location of the projector to correspond to the projection location included in the projection information of SET B. According to an embodiment of the disclosure, the electronic device 100 may adjust the projection location of the projector to be the projection location included in the projection information of SET B, by adjusting a location of at least one of the head, the connector, or the stand.

For example, it is assumed that θ2 in the projection location of SET B is 180°. This may indicate that content projected from the projection location is projected onto a floor surface or a table where a support of the stand is located.

According to an embodiment of the disclosure, the electronic device 100 may output, from the adjusted projection location, content according to the projection purpose.

In FIG. 10, according to an embodiment of the disclosure, the projection purpose included in the projection information of SET B is a calendar application output purpose.

According to an embodiment of the disclosure, the electronic device 100 may execute a calendar application to project content 1001 of the calendar application from the projection location.

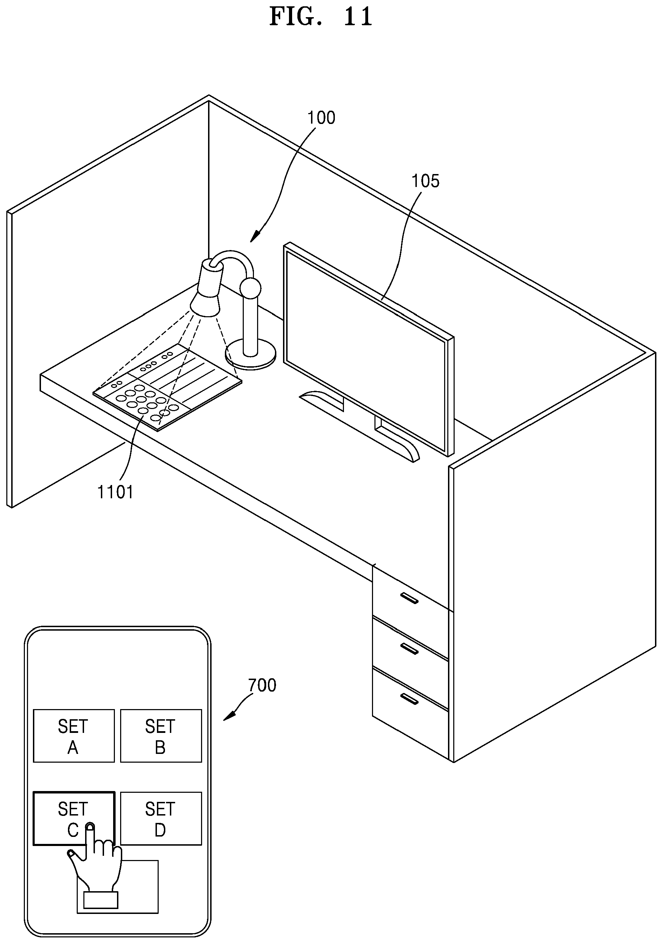

FIG. 11 illustrates the user controlling the projection operation of the electronic device 100 by using the control device 700, according to an embodiment of the disclosure.

Referring to FIG. 11, the user may select desired projection information by using the button included in the user interface screen output from the control device 700.

In FIG. 11, the user has selected projection information of SET C from among the plurality of pieces of projection information. According to an embodiment of the disclosure, based on SET C has been selected, the electronic device 100 may identify a projection location and a projection purpose included in SET C.

According to an embodiment of the disclosure, the electronic device 100 may adjust the location of the projector to correspond to the projection location included in the projection information of SET C. For example, θ2 of the projection location of the SET C is 180°, and thus, content projected from the projection location may be projected onto a table where the support of the stand is located.

According to an embodiment of the disclosure, the electronic device 100 may output, from the adjusted projection location, content according to the projection purpose.

In FIG. 11, according to an embodiment of the disclosure, the projection purpose included in the projection information of SET C is a scanner purpose.

According to an embodiment of the disclosure, the electronic device 100 may project, from the projection location, content corresponding to the scanner purpose. According to an embodiment of the disclosure, when the projection purpose is the scanner purpose, the electronic device 100 may project light onto an object to be scanned for a scan operation.

When the projection purpose is the scanner purpose, the electronic device 100 may perform, in addition of an operation of outputting the content, an operation of receiving information corresponding to the output content.

According to an embodiment of the disclosure, when the projection purpose is the scanner purpose, the electronic device 100 may output a signal requesting the user to perform a specific operation so as to receive the information corresponding to the output content. For example, the electronic device 100 may project light of content including text such as "please place document to be scanned". Alternatively, the electronic device 100 may output an audio signal requesting to place the document to be scanned or project flickering light at a location where the document to be scanned is to be placed.

According to an embodiment of the disclosure, the electronic device 100 may receive information corresponding to content output by using the camera and/or another sensor.

The user may identify a place where a document 1101 to be scanned is to be placed by using the light projected by the electronic device 100 or the audio signal, and place the document 1101 to be scanned on the identified location.

According to an embodiment of the disclosure, the electronic device 100 may project light onto the document 1101 and obtain light reflected from the document 1101. An optical sensor of the electronic device 100 may scan the document 1101 by analyzing the reflected light. In other words, according to an embodiment of the disclosure, the electronic device 100 may receive, as the information corresponding to the content output, the light reflected from the document 1101, based on the light projected for the scan operation.

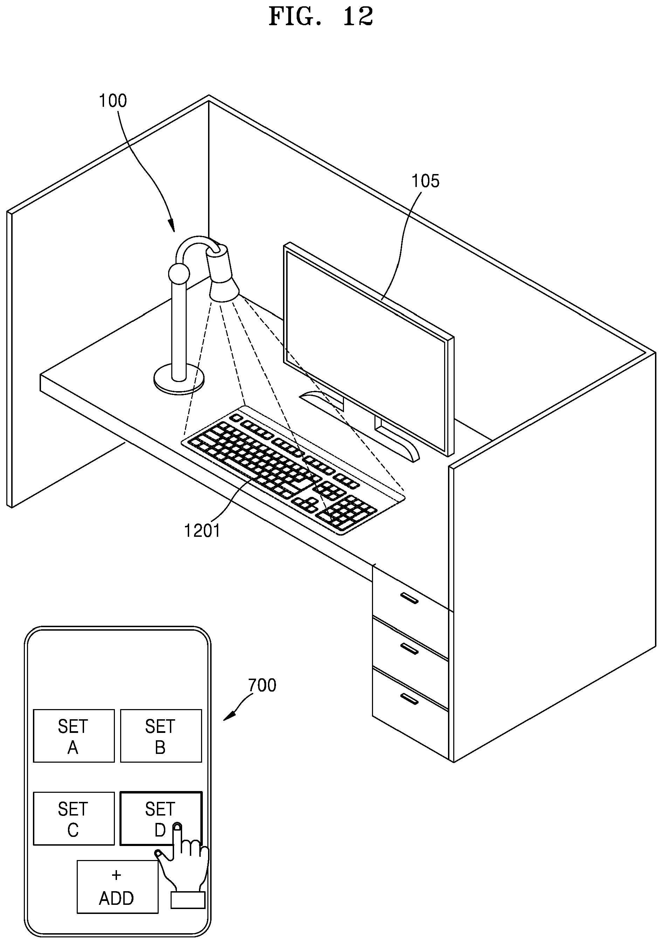

FIG. 12 illustrates the user controlling the projection operation of the electronic device 100 by using the control device 700, according to an embodiment of the disclosure.

Referring to FIG. 12, the user may select desired projection information by using the button included in the user interface screen output from the control device 700.

In FIG. 12, the user has selected projection information of SET D from among the plurality of pieces of projection information.

According to an embodiment of the disclosure, based on SET D has been selected, the electronic device 100 may identify a projection location and a projection purpose included in SET D.

According to an embodiment of the disclosure, the electronic device 100 may adjust the location of the projector to correspond to the projection location included in the projection information of SET D. For example, θ2 of the projection location of the SET D is 180°, and thus, content projected from the projection location may be projected onto the table where the support of the stand is located.

According to an embodiment of the disclosure, the electronic device 100 may adjust the projection location of the projector to be the projection location included in the projection information of SET D, by adjusting a location of at least one of the head, the connector, or the stand.

According to an embodiment of the disclosure, the electronic device 100 may output, from the adjusted projection location, content according to the projection purpose. In FIG. 12, according to an embodiment of the disclosure, the projection purpose included in the projection information of SET D is a projection keyboard purpose. According to an embodiment of the disclosure, a projection keyboard may be a keyboard for using the external electronic device 105.

According to an embodiment of the disclosure, when the projection purpose is the projection keyboard purpose, the electronic device 100 may project, onto a projection area, content of a virtual keyboard shape, which is content corresponding to the projection keyboard purpose.

According to an embodiment of the disclosure, the electronic device 100 may output content 1201 corresponding to the projection keyboard purpose from the projection location. The content 1201 corresponding to the projection keyboard purpose may be virtual keyboard shape content having a shape like an actual keyboard.

Based on the content 1201 corresponding to the projection keyboard purpose being output, the user may type various keys included in the content 1201 corresponding to the projection keyboard purpose, in a similar manner as using an actual keyboard.

According to an embodiment of the disclosure, the electronic device 100 may receive information corresponding to content output by using the camera and/or another sensor.

According to an embodiment of the disclosure, the electronic device 100 may obtain an image of movement of the user's fingers by using the camera, so as to detect an operation of the user selecting and pressing keys included in a virtual keyboard. The electronic device 100 may receive, as the information corresponding to the content output, the image obtained by photographing the movement of the user's fingers, based on the content of the virtual keyboard shape.

According to an embodiment of the disclosure, the electronic device 100 may further include an infrared sensor. For example, the electronic device 100 may obtain movement information of the user's fingers pressing the keys included in the virtual keyboard by using the infrared sensor.

According to an embodiment of the disclosure, the electronic device 100 may further accurately detect the movement of the user's fingers using the projection keyboard by receiving the information corresponding to the content output by using the camera and the infrared sensor together.

According to an embodiment of the disclosure, the electronic device 100 may identify the keys selected by the user by using the movement information of the user's fingers or locations of the user's fingers. According to an embodiment of the disclosure, the electronic device 100 may transmit, to the external electronic device 105, information about the keys selected by the user.

Alternatively, according to an embodiment of the disclosure, the external electronic device 105 may include an infrared sensor, and the external electronic device 105 may obtain the movement information of the user's fingers on the virtual keyboard and operate accordingly.

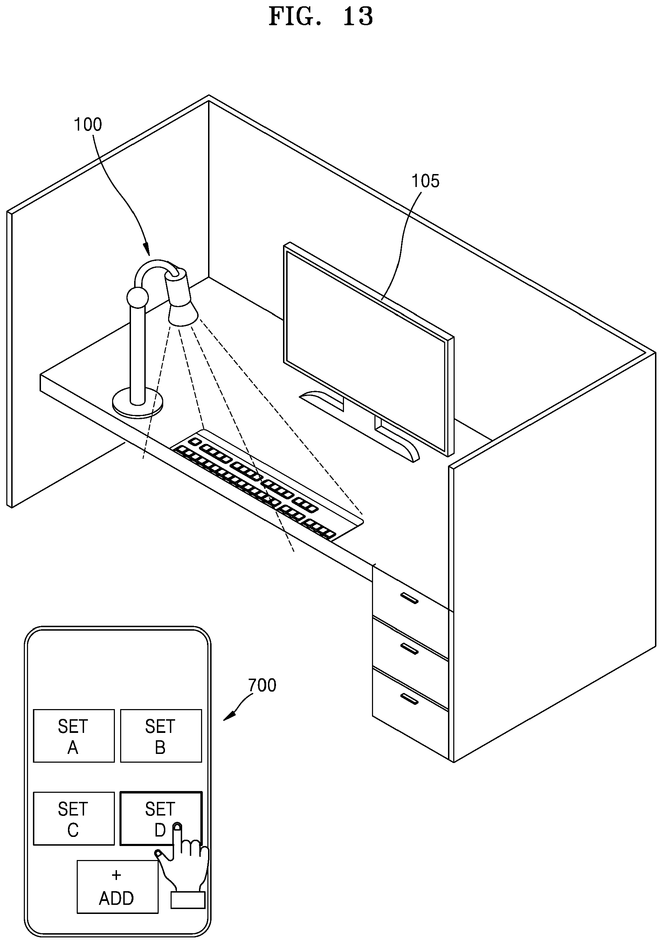

FIG. 13 illustrates the user controlling the projection operation of the electronic device 100 by using the control device 700, according to an embodiment of the disclosure.

Referring to FIG. 13, the user may select desired projection information by using the button included in the user interface screen output from the control device 700.

In FIG. 13, as in FIG. 12, the user has selected the projection information of SET D from among the plurality of pieces of projection information. According to an embodiment of the disclosure, based on SET D has been selected, the electronic device 100 may identify the projection location and the projection purpose included in SET D.

According to an embodiment of the disclosure, the electronic device 100 may adjust the location of the projector to correspond to the projection location included in the projection information of SET D.

In FIG. 13, unlike FIG. 12, it is assumed that the electronic device 100 is moved to a location different from a location when the projection information of SET D is stored.

According to an embodiment of the disclosure, in order to adjust the location of the projector to the projection location included in the projection information, the electronic device 100 may adjust a location of at least one of the head, the connector, or the stand. However, because the electronic device 100 has been moved to a corner of the table, unlike a previous location, even when the electronic device 100 adjusts a location of at least one of the head, the connector, or the stand, the location of the projector is different from the projection location included in the projection information of SET D.

According to an embodiment of the disclosure, the projection information of SET D may include a guide image. The guide image may be an image obtained by photographing a guide pattern projected onto a projection area from the projection location included in the projection information of SET D when generating the projection information of SET D.

According to an embodiment of the disclosure, the electronic device 100 may adjust the projection location to the projection location of SET D and then project the guide pattern from a current projection location. According to an embodiment of the disclosure, the electronic device 100 may obtain a current guide image of the projection area onto which the guide pattern is projected.

According to an embodiment of the disclosure, the electronic device 100 may compare the current guide image with the guide image stored in the projection information of SET D to obtain a difference therebetween. According to an embodiment of the disclosure, when the difference is equal to or greater than a specific size, the electronic device 100 may adjust the current projection location of the projector so that the difference is reduced, and then output content corresponding to the projection purpose.

According to an embodiment of the disclosure, the electronic device 100 may, when the difference is included in the first reference range but not included in the second reference range smaller than the first reference range, adjust the difference to be reduced. According to an embodiment of the disclosure, the electronic device 100 may control a driver so that the difference is within the second reference range, and thus, the current projection location is closer to the projection location of SET D.

For example, the electronic device 100 may adjust the projection location of the projector so that the content of the virtual keyboard shape is projected from a location close to the projection location shown in FIG. 12.

According to an embodiment of the disclosure, the electronic device 100 may warp the current guide image so that the difference is within the second reference range.

According to an embodiment of the disclosure, when the difference is not included in the first reference range, the electronic device 100 may output information about guidance of location movement.

In FIG. 13, when it is determined that the difference is outside a specific range, i.e., the first reference range, the electronic device 100 may output the information about guidance to move the location of the electronic device 100. For example, the electronic device 100 may output the information about the guidance of location movement of the electronic device 100 by using various methods, such as vibration, an audio signal, text, and flickering.

The user may move the electronic device 100 to another location, for example, towards an inner side of the table as shown in FIG. 12, according to the guidance of location movement output by the electronic device 100.

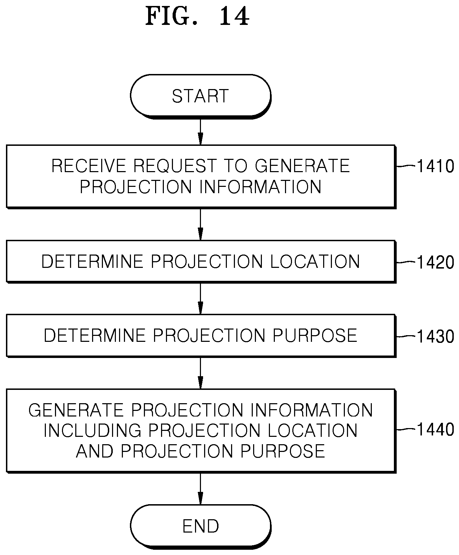

FIG. 14 is a flowchart of an operating method of the electronic device 100, according to an embodiment of the disclosure.

Referring to FIG. 14, the electronic device 100 may receive a request to generate projection information from the user (operation 1410).

According to an embodiment of the disclosure, the electronic device 100 may determine a projection location (operation 1420).

According to an embodiment of the disclosure, the user may set the projection location by adjusting a location of at least one of the projector, the stand, or the connector included in the electronic device 100. Based on receiving the request to generate the projection information from the user, the electronic device 100 may determine a current projection location of the projector as the projection location to be included in the projection information.

According to an embodiment of the disclosure, the electronic device 100 may obtain at least one of a surrounding space image or surrounding space depth information through a sensing unit, and obtain information about a surrounding space based thereon. According to an embodiment of the disclosure, the electronic device 100 may recommend the projection location, based on the information about the surrounding space.

According to an embodiment of the disclosure, the electronic device 100 may identify, among projection spaces, a flat area that is not severely curved, an area in which a color of a projection plane is brighter than certain luminance, and a location where a keystone corrected projection image may be projected widest, and recommend a location that satisfy such conditions as the projection location.

According to an embodiment of the disclosure, the electronic device 100 may recommend a projection purpose. According to an embodiment of the disclosure, the electronic device 100 may recommend the projection purpose appropriate to the projection location, based on at least one of the information about the surrounding space or the projection location.

According to an embodiment of the disclosure, the electronic device 100 may recommend the projection purpose depending on whether a size of the projection plane is large and whether a projection direction is a ceiling, a floor, or a wall.

The user may directly select the projection purpose or select one of projection purposes recommended by the electronic device 100.

According to an embodiment of the disclosure, the electronic device 100 may determine the projection purpose according to the user's selection (operation 1430).

According to an embodiment of the disclosure, the electronic device 100 may generate the projection information including the projection location and the projection purpose (operation 1440).

The electronic device 100 may store the projection information by including the projection information to a projection information list.

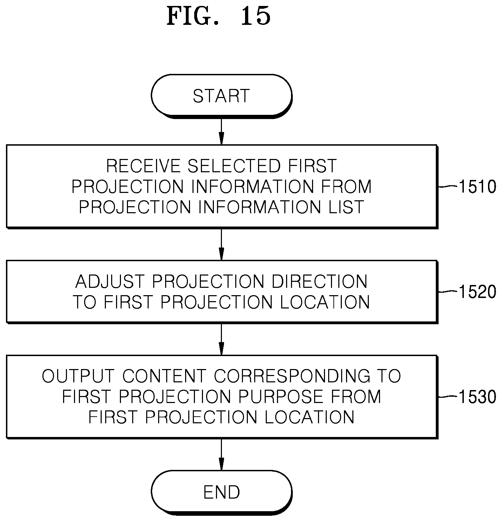

FIG. 15 is a flowchart of an operating method of the electronic device 100, according to an embodiment of the disclosure.

Referring to FIG. 15, the electronic device 100 may receive selection of first projection information from a projection information list (operation 1510).

According to an embodiment of the disclosure, the electronic device 100 may identify a first projection location included in the first projection information. The first projection location may be determined as rotating angles, such as θ1, θ2, and θ3.

According to an embodiment of the disclosure, the electronic device 100 may adjust a projection direction to the first projection location (operation 1520).

According to an embodiment of the disclosure, the electronic device 100 may identify a first projection purpose included in the first projection information.

According to an embodiment of the disclosure, the electronic device 100 may output, from the first projection location, content according to the first projection purpose (operation 1530).

According to an embodiment of the disclosure, the electronic device 100 may obtain a keystone correction amount from the first projection information and perform keystone correction on the content based on the keystone correction amount.

According to an embodiment of the disclosure, the electronic device 100 may obtain at least one of flatness, material, color, or brightness of a first projection area. According to an embodiment of the disclosure, the electronic device 100 may obtain ambient brightness through the illumination sensor. According to an embodiment of the disclosure, the electronic device 100 may output first content corresponding to the first projection purpose by adjusting, based on at least one of the flatness, material, color, brightness of the first projection area, or the ambient brightness, at least one of a form, a color, or luminance of the first content.

The electronic device and the operating method thereof, according to some embodiments of the disclosure, may also be realized in the form of a recording medium including instructions executable by a computer, such as a program module executed by a computer. A computer-readable medium may be an arbitrary available medium accessible by a computer, and includes all volatile and non-volatile media and separable and non-separable media. Further, examples of the computer-readable medium may include a computer storage medium and a communication medium. Examples of the computer storage medium include all volatile and non-volatile media and separable and non-separable media, which have been implemented by an arbitrary method or technology, for storing information such as computer-readable instructions, data structures, program modules, and other data. The communication medium typically includes a computer-readable instruction, a data structure, a program module, other data of a modulated data signal, such as a carrier wave, or another transmission mechanism, and an example thereof includes an arbitrary information transmission medium.

Also, an electronic device and an operating method thereof, according to an embodiment of the disclosure, may be implemented by a computer program product including a computer-readable recording medium/storage medium on which a program for executing the operating method is recorded, the operating method including receiving selection of first projection information including a first projection location and a first projection purpose from among at least one piece of projection information included in a projection information list, adjusting a projection direction to the first projection location based on the first projection information, and outputting first content corresponding to the first projection purpose from the first projection location.

The machine-readable storage medium may be provided in the form of a non-transitory storage medium. Here, the "non-transitory storage medium" only denotes a tangible device and does not contain a signal (for example, electromagnetic waves). This term does not distinguish a case where data is stored in the storage medium semi-permanently and a case where the data is stored in the storage medium temporarily. For example, the "non-transitory storage medium" may include a buffer where data is temporarily stored.

According to an embodiment of the disclosure, a method according to various embodiments of the disclosure disclosed in the present specification may be provided by being included in a computer program product. The computer program products are products that can be traded between sellers and buyers. The computer program product may be distributed in the form of machine-readable storage medium (for example, a compact disc read-only memory (CD-ROM)), or distributed (for example, downloaded or uploaded) through an application store or directly or online between two user devices (for example, smart phones). In the case of online distribution, at least a part of the computer program product (for example, a downloadable application) may be at least temporarily generated or temporarily stored in a machine-readable storage medium, such as a server of a manufacturer, a server of an application store, or a memory of a relay server.

## Claims

1. An electronic device comprising:
a projector;
a memory storing at least one instruction; and
at least one processor configured to execute the at least one instruction stored in the memory to:
receive a selection of first projection information including a first projection location and a first projection purpose, from among at least one piece of projection information included in a projection information list, wherein each piece of the at least one piece of projection information includes a projection location, which corresponds to a position of the projector, and a projection purpose,
adjust a projection direction of the projector to the first projection location, and
control the projector to project, from the first projection location, first content corresponding to the first projection purpose.

2. The electronic device of claim 1, further comprising:
a stand;
at least one connector connecting the projector to the stand; and
a driver configured to adjust a position of at least one of the stand, the projector, or the at least one connector,
wherein the at least one processor is configured to control the driver to adjust the projection direction of the projector to the first projection location.

3. The electronic device of claim 1 or 2, wherein
the projection purpose of each piece of the at least one piece of projection information includes at least one of a lighting purpose, an application output purpose, a monitor purpose, an external device content output purpose, a projection keyboard purpose, or a scanner purpose.

4. The electronic device of any one of claims 1 to 3, further comprising:
a camera; and
an illumination sensor,
wherein the at least one processor is configured to:
obtain a projection plane image by controlling the camera to photograph a first projection area corresponding to the first projection location,
obtain at least one of flatness, material, color, or brightness of the first projection area from the obtained projection plane image,
obtain ambient brightness through the illumination sensor, and
based on at least one of the obtained flatness, the obtained material, the obtained color, the obtained brightness of the projection area, or the obtained ambient brightness, control the projector to adjust at least one of a form, color, or luminance of the first content.

5. The electronic device of any one of claims 1 to 3, further comprising:
a camera,
wherein, when the first projection purpose is one of a projection keyboard purpose and a scanner purpose, the at least one processor is configured to receive, through the camera, information corresponding to the projection of the first content .

6. The electronic device of claim 5, further comprising:
an infrared sensor,
wherein, when the first projection purpose is the projection keyboard purpose, the at least one processor is configured to receive, through the camera and the infrared sensor, the information corresponding to the projection of the first content .

7. The electronic device of any one of claims 1 to 6, further comprising:
a camera; and
a driver configured to adjust a position of the projector,
wherein the first projection information includes a first guide image, wherein the first guide image is an image of a guide pattern projected from the first projection location when the first projection information is generated, and
the at least one processor is configured to:
project a guide pattern from the first projection location,
obtain, through the camera, an image of the projected guide pattern as a current guide image,
obtain a difference between the current guide image and the first guide image, and
when the difference between the current guide image and the first guide image is included in a first reference range but not included in a second reference range that is smaller than the first reference range, control the driver to adjust a projection location, or to warp the current guide image, so that the difference between the current guide image and the first guide image is within the second reference range.

8. The electronic device of claim 7, wherein
the at least one processor is configured to:
when the difference between the current guide image and the first guide image is not included in the first reference range, output information about guidance of location movement for the projector.

9. The electronic device of any one of claims 1 to 3, further comprising:
a user input unit; and
a camera,
wherein the at least one processor is configured to:
receive a request to generate new projection information through the user input unit, and
determine, as a second projection location to be included in the new projection information, a projection location selected from among a current projection location of the projector and a projection location recommended based on a surrounding image obtained with the camera.

10. The electronic device of claim 9, wherein
the at least one processor is configured to:
receive selection of a second projection purpose to be included in the new projection information through the user input unit, and
generate second projection information including the second projection purpose and the second projection purpose as one set, as the new projection information.

11. The electronic device of claim 10, wherein
the at least one processor is configured to:
output at least one recommended projection purpose, based on at least one of the projection location or a second projection area corresponding to the second projection location; and
receive, through the user input unit, selection of one of the at least one recommended projection purpose as the second projection purpose.

12. The electronic device of claim 11, wherein
the at least one processor is configured to:
output the at least one recommended projection purpose, based on at least one of the second projection location, a material, a color, or a size of the second projection area corresponding to the second projection location.

13. The electronic device of claim 10, wherein
the at least one processor is configured to:
control the projector to project a guide pattern onto a second projection area, from the second projection location;
perform keystone correction on the projected guide pattern; and
add a keystone correction amount of the guide pattern to the second projection information and store the same.

14. The electronic device of claim 10, wherein
the at least one processor is configured to:
control the projector to project a guide pattern onto a second projection area from the second projection location;
perform keystone correction on the projected guide pattern,
obtain, with the camera, a second guide image of the second projection area onto which the projected guide pattern on which the keystone correction has been performed is projected, and
add the second guide image to the second projection information and store the same.

15. A method of operating an electronic device including a projector, the method comprising:
receiving a selection of first projection information including a first projection location and a first projection purpose from among at least one piece of projection information included in a projection information list, wherein each piece of the at least one piece of projection information includes a projection location, which corresponds to a position of the projector, and a projection purpose;
adjusting a projection direction of the projector to the first projection location,; and
controlling the projector to project, from the first projection location, first content corresponding to the first projection purpose.
